# EUROPÄISCHE PATENTSCHRIFT

(11) **EP 1 200 817 B1**
(45) Veröffentlichungstag und Bekanntmachung des Hinweises auf die Patenterteilung: **13.06.2007**
(21) Anmeldenummer: 00938598.0
(22) Anmeldetag: 14.04.2000
(51) Int. Cl.: G01N 27/403

(54) **SENSORANORDNUNG MIT ELEKTRISCH ANSTEUERBAREN ARRAYS**
SENSOR ARRANGEMENT WITH ELECTRICALLY CONTROLLABLE ARRAYS
DISPOSITIF CAPTEUR POURVU DE SYSTEMES COMMANDES ELECTRIQUEMENT

(30) Priorität: 14.04.1999 DE 19916921; 12.07.1999 WO PCT/EP99/04883
(43) Veröffentlichungstag der Anmeldung: 02.05.2002
(73) Patentinhaber: Fraunhofer-Gesellschaft zur Förderung der angewandten Forschung e.V., 80686 München (DE)
(72) Erfinder: ALBERS, Joerg, D-25576 Brokdorf (DE); BERNT, Helmut, D-10997 Berlin (DE); BREDEHORST, Reinhard, D-20255 Hamburg (DE); HINTSCHE, Rainer, D-13127 Berlin (DE); SEITZ, René, D-25524 Itzehoe (DE)
(74) Vertreter: Leonhard, Frank Reimund
(86) Internationale Anmeldenummer: PCT/EP2000/003404
(87) Internationale Veröffentlichungsnummer: WO 2000/062048

(56) Entgegenhaltungen:
- WO-A-95/26500
- WO-A-96/33403
- WO-A-98/01758
- WO-A-99/07879
- DE-A- 4 236 421
- US-A- 5 605 662
- SOSNOWSKI R G ET AL: "RAPID DETERMINATION OF SINGLE BASE MISMATCH MUTATIONS IN DNA HYBRIDS BY DIRECT ELECTRIC FIELD CONTROL" PROCEEDINGS OF THE NATIONAL ACADEMY OF SCIENCES OF USA,US,NATIONAL ACADEMY OF SCIENCE. WASHINGTON, Bd. 94, Februar 1997 (1997-02), Seiten 1119-1123, XP000857636 ISSN: 0027-8424 in der Anmeldung erwähnt
- NIWA O ET AL: "HIGHLY SENSITIVE AND SELECTIVE VOLTAMMETRIC DETECTION OF DOPAMINE WITH VERTICALLY SEPARATED INTERDIGITATED ARRAY ELECTRODES" ELECTROANALYSIS,US,VHC PUBLISHERS, INC, Bd. 3, 1991, Seiten 163-168, XP000863401 ISSN: 1040-0397 in der Anmeldung erwähnt

## Beschreibung

Die Erfindung betrifft einen elektrischen Sensor, der aus multiplen Arrays mit Ultramikroelektroden als elektrochemischen Transduktoren besteht und zum gleichzeitigen Nachweis von verschiedenen Molekülen aus Substanzgemischen in der biochemischen Analytik der medizinischen Diagnostik und der Umweltüberwachung als Teil von Meßanordnungen verwendet werden kann. Außerdem betrifft die Erfindung ein Verfahren zur Verbesserung analytischer Prozesse.

Für die analytische Untersuchung biochemischer Assays ist es erwünscht, mehrere Analyte gleichzeitig in sogenannten Arrayanordnungen zu detektieren. Solche Arrays sind auf der Basis optischer Detektion weit verbreitet. Es ist aber von Vorteil, direkt elektrische Meßsignale ohne Umweg über optische Detektionshilfen zu erfassen und auf diese Weise partikeltolerant und volumenunabhängig zu messen. Die elektrische Detektion ermöglicht Preisvorteile und robustere Handhabung.

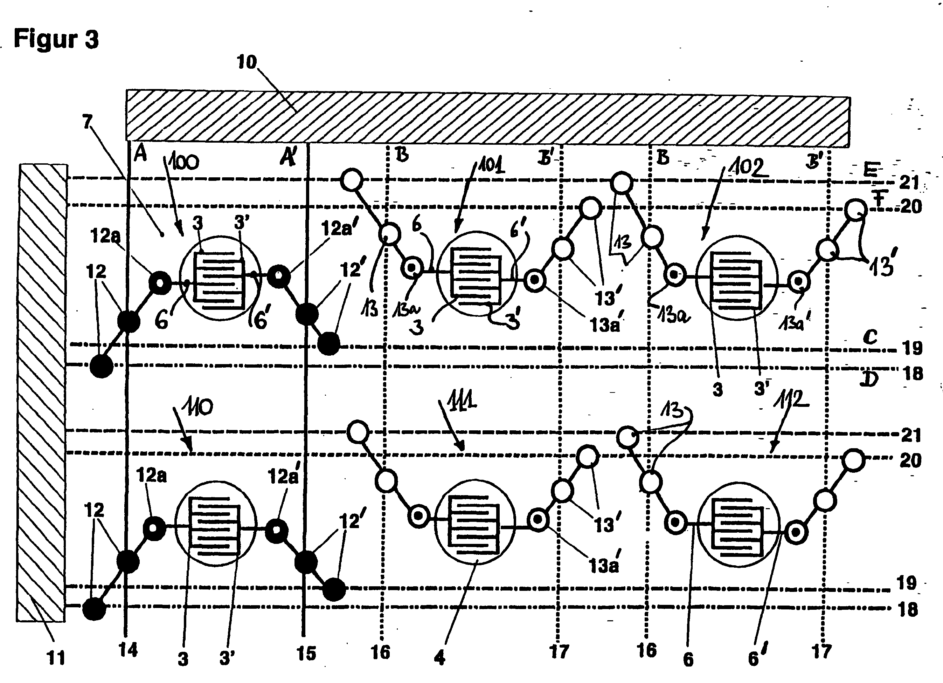

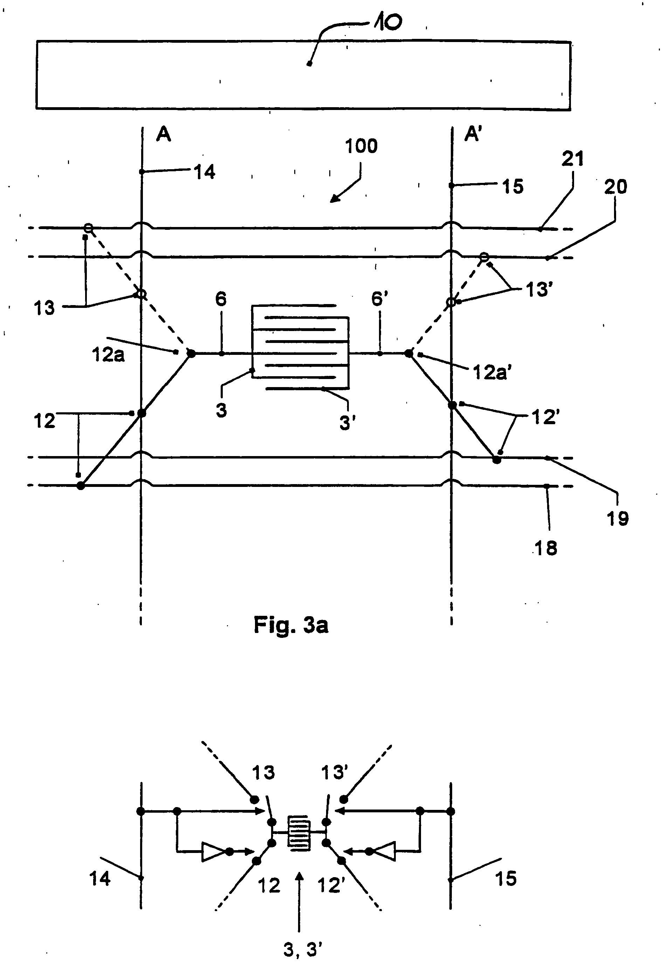

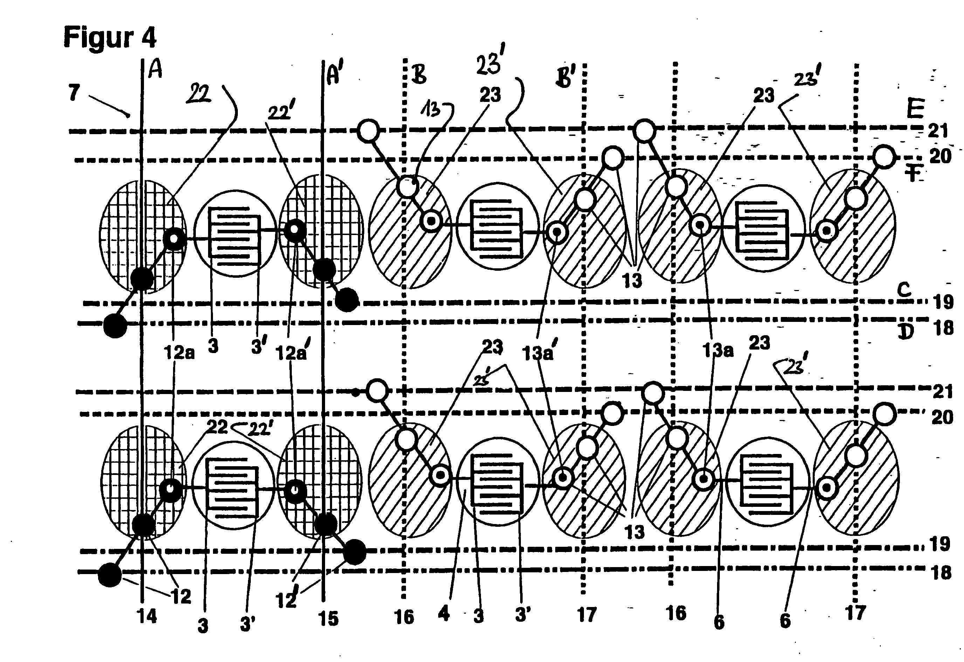

Aus WO A 98/01758 (Nanogen) oder US 5,965,452 ist ein Elektrodenarray (biologic electrode array) bekannt, das nach Fertigungsmethoden der Halbleitertechnik hergestellt wird. Das aufgebaute Array arbeitet mit Zeilen- und Spaltenadressierungen, vgl. dortige Figuren 3 und 4. Diese Arrays sind zur elektrochemischen Detektion molekularer Stoffe geeignet und haben mehr als zwei Sensorpositionen/Arrays auf einem im wesentlichen planaren Träger. Die Leitungsführung zur elektrischen Adressierung der Arrays war bereits genannt und ist ebenfalls auf dem Träger angeordnet, vgl. dort insb. Seite 5, Zeile 6 bis Seite 6, Zeile 31 und Seite 7, zweiter Absatz sowie alle Abbildungen 3 bis 5.

Ausgehend vom klassischen Elektrodensystem zur elektrochemischen Detektion gibt es umfangreiche Bemühungen, Elektroden zu miniaturisieren. Mit dem Begriff bezeichnet man üblicherweise elektrochemisch genutzte Elektrodenstrukturen in Dimensionen unter 5 µm. **R.M. Wightman und D.O. Dipf** beschreiben Möglichkeiten der Voltammetrie an Ultramikroelektroden in Electroanalytical Chemistry, Ed.A.J. Bard (Marcel Dekker, New York 1988) Vol. 15, p.267.

Solche Ultramikroelektroden ermöglichen auch besondere Detektionsverfahren wie das Redox-Recycling, vgl. O. Niwa et al., Electroanalysis 3(1991)163-168, das besonders für biochemische Affinitätsassays mit Enzymmarkierung, wie sie bei Immuno- und DNA-Assays üblich sind, vorteilhaft eingesetzt werden kann. Elektrodenstrukturen unter 300nm Strukturbreiten ermöglichen die markerfreie Detektion der Affinitätsbindung großer Moleküle an elektrodengebundene Fängermoleküle mittels der Impedanzspektroskopie, vgl. auch DE-A 196 10 115**.**

Ein Paar planarer Interdigitalelektroden für konduktometrische und voltametrische Messungen bezeichnen Sheppard et al. in Anal. Chem., 65(1993)1202 als Array.

Ein Paar interdigitaler Ultramikroelektroden in Siliziumtechnologie verwendeten-Aoki et al. [J. Elektroanal. chem., 79 (1997) 49] für reversible Redoxreaktionen, das sogenannte Redox-Recycling.

Wiederum ein einzelnes interdigitales Elektrodenpaar wurde von Tang et al. [ Anal. Chimica Acta, 214(1988) 187] als Detektorsystem für ein Immunoassay, bestehend aus einem Antigen und einem Antikörper genutzt.

Alle diese Anordnungen wurden aber nur für Einzelanalytbestimmung beschrieben, so daß arraytypische unterschiedliche Molekülspezies nicht einzelnen elektrisch detektiert werden konnten.

Mikroelektrodenarrays mit 16 parallelen Bandelektroden und 0,1 mm Elektrodenbreite wurden von Aoki et al. in Anal. Chem. 64(1992)44 zur elektrochemischen Detektion beschrieben. Dabei werden unterschiedliche Polarisationsspannungen an den einzelnen Bandelektroden angelegt und konstant gehalten. Die Elektroden werden seriell im msec-Takt ausgelesen, ohne daß den Einzelelektroden Schalter zugeordnet sind. Ein Tiefpaßfilter verhindert das Auftreten von Ladeströmen. Diese Anordnung ermöglicht nur die Detektion einzelner oder verschiedener elektrodenaktiver Spezies in Lösung.

Eine Weiterentwicklung interdigitaler Elektrodenpaare zu einem Array mit multiplen interdigitalen Elektroden wurden in DE-A 4318519 zum simultanen Betrieb an einem Multipotentiostaten angegeben. Bei diesem Verfahren werden die Potentiale an den Elektroden individuell kontrolliert und konstant gehalten. Das Array ist auch nur zur simultanen und parallelen Messung eines Analyten in Lösung geeignet. Ebenfalls mit einem Multipotentiostaten wurden 4 Felder mit punktförmigen Mikroelektroden parallel zur Bestimmung verschiedener Metalle mittels anodischem Strippingverfahren beschrieben DE-A 4424355. Das Verfahren erlaubt nur die spezielle Stripping-Voltametrie als Detektionsverfahren, wobei mit Hilfe der Square-wave-Voltametrie Spannungsrampen aufmoduliert wurden.

Das Prinzip einer voltametrischen parallelen Multikanalmessung an Mikroelektrodenarrays ist in Elektroanalysis 8, 10 (1996) 891, aufgezeigt. Ein Elektrodenarray mit 1 bis 2 µm großen Querschnitten von eingebetteten Kohlefasern benutzten Strein und Ewing [Analytical Chemistry 65 (1993) 1203]. Beide Verfahren gestatten keine serielle elektrische Abfrage verschiedener Sensorpositionen.

Yon Hin et al. [Sensors and Actuators B1(1990)550] beschreiben ein Multianalyt-Elektrodenarray bestehend aus mäanderförmigen parallelen Elektrodenbändern zur parallelen Analyse von Glukose und Galaktose mittels Leitfähigkeitsmessung. Dazu wurden Glukoseoxidase und Galactosidase in leitfähigem Polypyrol auf den Elektrodenoberflächen einpolymerisiert, gesteuert durch die Elektropolymerisation. Da dieses Array die elektrische Leitfähigkeit als Detetektionsgöße nutzt, sind Schaltvorgänge im Hinblick auf Störungen bei der Voltametrie ohne Bedeutung.

Ein nanostrukturiertes Goldelektrodenarray zur Immunodetektion wird von Musiel et al. [Journal of Vacuum Science and Technology B13 (6)(1995)2781] beschrieben. Dieses Elektrodenarray ist durch das Herauslösen von Nanopartikeln aus einer auf Gold aufgebrachten Isolationsschicht stochastisch verteilt und kann nicht individuell adressiert und ausgelesen werden.

US-A 5,605,662 beschreibt ein Elektrodenarray mit individuell ansteuerbaren Einzelelektroden mit ca. 30µm Durchmesser und davon separierten größeren Gegenelektroden auf einem Siliziumchip angegeben. Dieses Array wird nicht zur elektrochemischen Detektion, sondern nur zur Adressierung und Felderzeugung zwischen gel-beschichteten Einzelelektroden und den am Rande dieses Arrays angeordneten Gegenelektroden benutzt. Mit dem erzeugten Feld werden geladene Moleküle auf individuelle Elektrodenpositionen transportiert oder durch entgegengesetzte Polarisation von diesen Feldern entfernt. Für einen konkreten Fall ist dies für das Anreichern von DNA im Gel über individuellen Elektroden zur DNA-Hybridisierung an Fängern und im umgekehrten Fall das Beseitigen von Mismatches durch Feldunterstützung der DNA-Stringenzbehandlung beschrieben [R.G.Sosnowski et al., Proc. Natl. Acad. Sci., USA, 94 1997)1119]. Die Anwendung dieses Systems zur molekularbiologischen Multianalytdiagnostik ist in US-A 5,632,957 beschrieben, wobei der elektrische Transport mit optischer Detektion gekoppelt ist.

Ein Array zur potentiometrischen Anwendung mit mehr als tausend individuell adressierbaren Elektrodenelementen wird von Hermes et al. in Sensors and Actuators B 21(1994)33 beschrieben. Die Einzelpositionen dieses Sensorarrays werden **nur zum Zeitpunkt der Auslesung** aktiv angeschaltet, während im Nichtlesezustand keine Spannung anliegt und keine Reaktion stattfindet. CMOS-Schalter für dieses An- und Ausschalten der Elektroden sind an jeder Arrayposition individuell angeordnet. Ein analog aufgebautes Multielektrodenarray mit nMOS-Schaltern an jeder Sensorposition wurde von Fiaccabriono et al. in Sensors and Actuators B, 18 - 19 (1994) 675 beschrieben. Bei dieser Art von Arrays entstehen beträchtliche Ladeströme, die amperometrische Detektionsverfahren stark beeinträchtigen. Ein Array von 19 Iridiumelektroden mit 10 µm Durchmesser als einzeln adressierbare Elektroden beschreiben Kounaves et al. in Anal. Chem. 66(1994)418. Die Elektroden wurden seriell in 2-Elektrodentechnik ausgelesen und nur im Lesezustand mit einem Potential belegt.

Ein Überblick über die Elektrochemie an Ultramikroelektroden ist zu finden in Physical Electrochemistry, Ed. Rubinstein, Marcel Dekker, 1995 New York, p. 131-208.

Die Applikation eines Paares von 20 - 300 nm-strukturierten Interdigitalelektrodenarrays zur markerfreien Impedanzanalyse einer Molekülkonjugation auf den Elektrodenoberflächen wurde in DE-A 196 10 115 beschrieben. Ein einzelnes Paar nanostrukturierter Interdigitalelektroden für die Admitanzspektroskopie gelöster Moleküle wurde in J. Vac. Sci.Technol. A 13 (3) (1995) 1755 beschrieben. Das analoge Prinzip der Impedanzmessung im Elektrodenzwischenraum immobilisierter Moleküle mittels eines interdigitalen, Paars schattenartig an eine Grubenwand gedampfter Nanometerelektroden ist in WO 97/21094 gezeigt. Bei allen beschriebenen Impedanzmessungen mit Ultramikroelektroden wurde ein interdigitales Elektrodenpaar in Zweipol-Technik an ein kommerzielles Impedanzmeßgerät angeschlossen.

Eine besondere Form individuell adressierbarer sub-µm-Bandelektrodenarrays sind von M. P. Nagale und I. Fritsch in Analytical Chemistry 70,14 (1998) 2902 als gestapelte, voneinander isolierte Dünnfilmelektroden beschrieben. Dabei sind die Querschnitte der Stapel als aktive Elektroden verwendet worden. Zur elektrochemischen Kontrolle wurde ein kommerzieller computergestützter Potentiostat mit Arbeits-, Referenz- und Gegenelektrode verwendet. Die Auslesung der 15 Elektrodenschichten erfolgte seriell durch An- und Ausschalten.

Ein Mikroelektrodenarray zur extrazellulären Aktivitätsmessung und Stimulation lebender Zellen und neuronaler Gewebe benutzt individuell adressierbare Mikroelektroden von 14 µm im Durchmesser, die mittels eines CMOS VLSI-Chips zur Stimulation und zur Detektion eingesetzt werden, wobei jede Chipelektrode zellulär erzeugte Biopotentiale zwischen 0,9 - 2,1 mV und 100 - 400 µV individuell erfassen kann, Pancrazio et al. in Biosensors & Bioelectronics 13(1998) 971. Zur Stimulation werden Frequenzen zwischen 0,7 und 50 kHz mit Biasspannungen von 12 -16 µV appliziert. Die Elektroden werden seriell im ein- oder ausgeschaltenen Zustand betrieben.

Ein Verfahren und Vorrichtung zur Anreicherung und Aufreinigung von Molekülen an großflächigen Elektroden wird von WO 98/02399 beschrieben. Dabei werden nur geringe Feldstärken erzeugt und keinerlei Detektionsverfahren einbezogen.

Die Modifizierung und Belegung der Oberflächen mit Biomolekülen, wie sie für das elektrische Sensorarray benutzt werden, wird durch kovalente Bindung oder Adhäsion an die metallischen oder nichtmetallischen Oberflächen oder an die Wandungen von Kompartments erreicht. Die Moleküle werden dabei als Monolayer oder Multilayer durch kovalente Anbindung, durch Adsorption, durch Einlagerung in Polymere oder als adhäsive Filme aufgebracht, Mandenius et al., Methods in Enzymology 137(1988)388. Weit verbreitet ist die Haftschichterzeugung auf Oberflächen mit funktionalisierten Silanen als Monoschichten, Fischer et al., Europhysics Letters 28 (2) (1994) 129 - 134, über gasförmig oder in flüssiger Phase aufgebrachte quervernetzten Schichten, Williams et al. Biosensors & Bioelectronics 9(1994) 159. An diese Silanderivate, die Amino-, Thiol-, Aldehyd-, Hydroxyl-, Caboxyl- oder andere funktionelle Gruppen tragen können, werden meist mit Hilfe von Crosslinking-Techniken [H.G. Bäumert and H. Fasold, Methods in Enzymology, Vol. 172, p. 584] verschiedenste andere Verbindungen mit passenden reaktiven Gruppen kovalent gebunden. Auf diese Weise sind alle als affinitätsbindende Fängermoleküle geeigneten bioaktiven Substanzen wie Oligonukleotide, Peptide, Haptene und andere auf den Elektrodenflächen zu immobilisieren.

Eine spezifisch die Metalloberflächen nutzende Immobilisierung ist die Ausbildung von Self-assembling-monoschichten durch Thiol/Goldbindungen. Nach Ausbildung der Self-assembling-monolschicht wird z.B. über Streptavidin/Biotin-Kopplungen die geordnete Anbindung von Proteinen wie Antikörpern erreicht, Spinke et al., Langmuir 9 (1993) 1821. In einem anderen Ansatz werden auf Goldflächen über Chelator-thioalkane, histidinmarkierte Proteine geordnet an die Oberflächen gebunden, Kröger et al., Biosensors und Bioelectronics 14 (1999) 155.

Eine weitere Methode zur selektiven Aufbringung organischer Haft- und Kopplungsschichten ist die Elektropolymerisation, beispielsweise für die Bindung von Ferrocenen auf Platinelektroden, Kamau et al. in Anal. Chem. 66(1994)994.

Für die Herstellung biomolekularer Arrays in Mikrodimensionen sind eine Reihe von Verfahren gebräuchlich. Von makroskopischen Auftupfen ist das Aufsetzen miniaturisierter Ringe auf Chipoberflächen abgeleitet, auf die vorher entsprechende Moleküle durch Tauchen aufgebracht wurden, Rose in J. Ass. Lab. Autom. 3,3(1998) 53.

Das piezoelektrische Drucken, analog den Tintenstrahldruckern, zum Aufbau von DNA-Chips gelang Blanchard, Genetic Engineering, Principles and Methods 20(1998)111.

Das so genannte Mikrokontaktdrucken, d.h. das Übertragen von Molekülen mittels Mikrostempel wurde von Kumar und Whitesidess, Appl.Phys.Lett.63(1993)2002, beschrieben.

Eine mit photolithgraphischen Masken unterstützte Festphasensynthese auf Chip-Mikroarealen, die Nucleotidaufbau mittels Photoaktivierung erlaubt, beschreiben Mcgall et al., Proc. Natl. Acad. Sci., USA 93(1996) 13555.

Durch elektrochemische Fokussierung werden nach US-A 5,605,662 geladene Moleküle aus der Lösung zu ihren Bindungsplätzen in Gelen über Elektroden transportiert.

Durch perforierte Membranen, die auf Chipoberflächen aufgedrückt werden, sind an den offenen Stellen lmmobilisierungsreaktionen an den Oberflächen in flüssiger Phase möglich, Ermantraut et al., Proc. of µTAS'98, Alberta, Can., 1998, p. 217.

Die aufgezeigten Verfahren stehen für Standardmethoden, die es erlauben, DNA, Oligonukleotide, Proteine und andere Moleküle auf Arraypositionen zu immobilisieren.

Nachteil aller bisher beschriebenen elektrischen Sensorarray-Anordnungen mit Elektroden als Transducer ist es, daß sie nur zur Monoanalytbestimmung geeignet sind, oder daß **die eigentliche sensorische Funktion** von zusätzlichen optischen Komponenten übernommen werden muß. Die bisher als Array bezeichneten Sensorpositionen (Elektrodensysteme), z.B. Interdigitalelektroden, stellen keine Arrays mit Erformig zur Multianalytmessung der Bisher ist zudem nicht bekannt, wie man Elektrodenarrays mit den in der Computertechnik üblichen seriellen Verfahren, also nacheinander auslesen kann, ohne dabei eine elektrische Doppelschicht, die sich durch Polarisation an den Elektroden bei voltametrischen Detektionsverfahren aufbaut, zu stören.

Zur Verbesserung dieser Situation ist also eine Arrayanordnung zur Multianalytmessung notwendig, die eine rein elektrische Sensorfunktionen ermöglicht und die mit elektrischen Steuer- und Meßverfahren ausgeführt werden kann.

Aufgabe der Erfindung ist es, ein Sensorarray für biochemische Affinitätsassays zur Verfügung zu stellen, das mit den Methoden der Halbleitertechnologie gefertigt werden kann und als elektrochemischer Transducer meßtechnisch einfache elektrische Signale direkt in der Position wählbar und ohne optische Komponenten erzeugt. Weiterhin soll ein Meßverfahren zur Verfügung gestellt werden, mit dem aus Stoffgemischen unterschiedliche Analyte gleichzeitig bestimmt werden. Aufgabe ist es weiterhin, ein Verfahren zur seriellen elektrischen Auslesung des Sensorarrays zur Verfügung zu stellen, das Störungen des elektrischen Meßprozesses vermeidet und technologisch kompatibel zu den Methoden der Computertechnologie ist. Es sollen Miniaturisierungs-, Fertigungs- und Handhabungsvorteile realisiert sowie die verbesserte analytische Handhabung molekularbiologischer Assays aufgezeigt werden.

Anspruch 1 und 38 lösen jeweils für sich diese Aufgaben.

Die Erfindung bezieht sich zum einen darauf, daß als Sensor eine Vielzahl von Ultramikroelektroden, d.h. vorzugsweise Elektroden mit typischen Strukturdimensionen unter 1 µm verwendet und als Arrays auf einem Träger angeordnet werden. Die Anordnung der Ultramikroelektroden im jeweiligen Array zielt neben der Miniaturisierung auf ein vorteilhaftes Diffusionsverhalten der zu detektierenden Moleküle ab und weiterhin auf die Nutzung voltametrischer und impedimetrischer Detektionsverfahren, wie Redox-Recycling und markerfreie Impedanzmessungen, für die derartige Elektroden Voraussetzung sind.

Die Erfindung bezieht sich ferner auf ein spezielles **serielles Adressierungsverfahren** (für Auslesung oder Transport) der elektrochemischen Prozesse an den Sensorpositionen (Arrays). Die erfindungsgemäße Ultramikroelektrodenanordnung bezieht sich gleichermaßen auf die Erzeugung multipler elektrischer Felder mit sehr hohen Feldstärken, die zum aktiven Transport von Molekülen individuell an allen Sensorpositionen geeignet sind.

Diese Aufgabe wird insbesondere auch gelöst durch ein elektrisches Sensorarray für die Multianalyt-Messung biochemischer molekularer Assays, welches folgendes umfaßt:
(a) ein mechanisch stabiles planares Substrat, auf dem als Arrays mehrere Sensorpositionen, die jeweils aus lokal separierten, mindestens paarweisen Ultramikroelektroden und wahlweise zusätzlichen Hilfselektroden bestehen,
(b) isolierten Leitungen, die eine individuelle elektrische Adressierung jeder Sensorposition und Einzelelektrode gestatten,
(c) zusätzlichen elektrischen Leitungen, die eine elektrochemische Kontrolle und Steuerung an jeder Sensorposition ermöglichen, und wahlweise elektrische Gleich- und/oder Wechselfelder an jeder Sensorposition ermöglichen,
(d) die Immobilisierung unterschiedlicher oder gleicher affinitätsbindender Moleküle, die entweder auf allen oder ausgewählten Oberflächen der einzelnen Sensorpositionen direkt oder an partikulären Trägern oder gelartigen Substanzen gebunden oder eingeschlossen sind und die individuell über den einzelnen Sensorpositionen angeordnet werden,
(e) integrierte elektronische Funktionselemente, die die individuelle Kontrolle elektrochemischer Reaktionen an den einzelnen Sensorpositionen und unabhängig davon die individuelle elektrische Messung dieser Reaktionen an jeder Position gestatten, wobei die elektronischen Schaltelemente Gruppen, Reihen oder Einzelpositionen der Sensorpositionen zugeordnet sind.

Die Erfindung ermöglicht durch aktive Schaltelemente, bevorzugt im Substrat, eine serielle, d.h. nacheinander erfolgende, elektrische Auslesung der elektrochemischen Prozesse an einzelnen Sensorpositionen. Die aktiven Schalt-, Steuer- und Auslesefunktionen an jeder Sensorposition werden so ausgeführt, daß eine elektrische Doppelschicht, die sich bei elektrochemischen Prozessen an den Mikroelektroden ausbildet, nicht gestört wird.

Intelligente elektronische Funktionselemente als separate Bauelemente oder direkt an den einzelnen Sensorpositionen (Anspruch 7) ermöglichen es außerdem, elektrochemische Prozesse bei einer Sensorposition in den Zeiten zwischen den Adressierungen zum Auslesen aufzuzeichnen und damit zwischenzuspeichern.

Mit der Erfindung kann auch ein elektrisches Sensorarray zur Verfügung gestellt werden, das durch die variable Anzahl spezifischer Sensorpositionen für unterschiedliche Analyte erlaubt, unterschiedliche analytische Fragestellungen zu lösen. Darüber wird erfindungsgemäß ein Verfahren aufgezeigt, das es ermöglicht, mit den zur Detektion verwendeten Elektroden partikeltolerant, d.h. unabhängig von optischen Eigenschaften in Sub-µl-Volumina pro Sensorposition zu messen.

Von Vorteil ist weiterhin die Herstellung des Sensors mit wafer-orientierten Technologien der Halbleiterindustrie, die auch kompatibel zu den Verfahren für die Immobilisierung bzw. Beladung von biochemischen affinitätsbindenden Erkennungsmolekülen auf den Sensorpositionen sind.

Eine besondere Variabilität der Anordnungen und Verfahren wird durch die folgenden Maßnahmen erreicht:
- Bei weniger als ca. 50 elektrische Sensorpositionen im Sensor werden die Ultramikroelektroden durch direkte Leiterbahnen unter einer Isolationsschicht zu (frei liegenden) Kontaktflächen geleitet. Als planare Substrate finden für diese Applikation Silizium, Glas, Keramik oder Polymere vorteilhafte Verwendung.
- Sowohl geringe als auch große Zahlen von Sensorpositionen pro Sensor werden durch Integration der Leitungen mittels Si-Chip-Technologie realisiert. Silizium als planares Trägerelement wird insbesondere auch dann verwendet, wenn eine größtmögliche dichte Anordnung von einzelnen Sensor Positionen erreicht werden soll.
- Als Träger für die Arrays des Sensors wird Silizium auch verwendet, weil es die Anwendung einer effizienten Technologie gestattet und insbesondere dann sinnvoll ist, wenn zur individuellen Kontrolle der Sensorpositionen des Sensors Steuerung und Schaltung sowie Auslesung der einzelnen Sensorpositionen zusätzliche elektronische Elemente wie Transistoren, Dioden, Widerstände und andere übliche elektronische Komponenten positionsbezogen im Träger integriert werden.
- Sowohl bei den elektrischen Sensorpositionen mit direkter Kontaktierung als auch bei jenen mit integrierten elektronischen Elementen an den individuellen Sensorpositionen wird erfindungsgemäß ein neues Verfahren zur unabhängigen Kontrolle und seriellen elektrochemischen Detektion an den Sensorpositionen benutzt. Für die elektrochemische Detektion werden dazu durch Elektrodenpolarisation erzeugte elektrische Doppelschichten an den Elektrodenoberflächen kontinuierlich an alle Sensorpositionen appliziert. Erreicht wird dies bspw durch Umschalter, die verhindern, daß durch serielle, d. h. im zeitlichen Abstand nacheinander erfolgende elektrische Auslesungen der einzelnen Sensorpositionen, diese Polarisation gestört wird. Es treten keine sogenannten Umladungsprozesse auf.
- Ein besonderer Nutzen entsteht dadurch, daß die zur Detektion verwendeten Ultramikroelektroden wahlweise ergänzt um weitere Hilfselektroden, gleichzeitig sowohl als Elemente zur Ausführung elektrophoretischer Transportvorgänge der Analytmoleküle zu den Orten affinitätsbindender Partnermoleküle als auch zur Beseitigung unerwünschter Bindungsereignisse eingesetzt werden.

Das Vermeiden der Störung der Polarisation wird durch die Anordnung zur elektrischen Kontrolle erreicht, die die nicht mehr adressierten Arrays mit einer Polarisationsspannung kontinuierlich weiterhin versorgt (Anspruch 6). Die Weiterversorgung dauert bis zum nächsten Zeitpunkt der Adressierung, zu dem eine Information der Sensorposition erneut abgefragt wird. Die elektrische Kontrolle in den Nicht-Adressierungszeiten ist in der Lage, einen Stromfluß bereitzustellen, bevorzugt durch eine im wesentlichen galvanische oder ohmsche Verbindung von einem jeweiligen Array zu der das Potential liefernden Quelle, insbesondere fernab von der Sensorposition (Anspruch 36,37).

Es sind drei Qualitäten von Leitungsführungen vorgesehen. Eine Leitungsführung dient der Adressierung, also der Auswahl eines Arrays (Sensorposition), einer Spalte oder einer Zeile von Arrays (Anspruch 5). Eine weitere Leitungsführung dient der Übertragung von Signalen (Strom, Spannung, Potential oder solche Verläufe) mit Bezug auf eine jeweils individuelle Sensorposition. Eine dritte Leitungsführung dient der Bereitstellung der beschriebenen Polarisationsspannung bzw. solcher Potentiale, zum Anlegen an die gerade nicht adressierten (d.h. gerade nicht gelesenen) Arrays.

Bevorzugt können die Leitungsführungen zum Auslesen und zum Bereitstellen der Polarisationsspannung (Erhaltungsspannung) parallel und mit dem Träger gekoppelt verlaufen. Ebenfalls bevorzugt verläuft die Leitungsführung zur Adressierung senkrecht dazu (Anspruch 35).

Die Leitungsführungen können, mit Ausnahme der "weiteren Leitungen" auch außerhalb des Trägers vorgesehen sein.

Umschalter (Anspruch 40) sorgen für ein Verändern der Zuordnung der Elektroden zu entweder der einen oder der anderen Leitungsführung, abhängig vom Zustand der Adressierung. Ein Zustand, bei dem die Anschlüsse der Elektroden "nicht angeschlossen sind" (not connected oder n.c.), existiert nicht. Es ergeben sich kontrollierte und störungsfreie Umschaltungen von Meß- zu Erhaltungspotential bzw. eine zwischenzeitliche Erfassung und Speicherung der Vorgänge, die durch den Adressiervorgang erkannt werden können (Anspruch 8). Besonders vorteilhaft ist die Möglichkeit einer zwischenzeitlichen Erfassung, um während der nicht adressierten Perioden keine Zeit nutzlos verstreichen lassen zu müssen. Durch die elektrische Kontrolle und die davon angelegten Erhaltungspotentiale kann der Prozeß ständig weiterlaufen und auch die zwischen zwei Erfassungen liegende Zeit aktiv genutzt werden.

Beschreibung der Zeichnungen und der Ausführungsbeispiele.
- Figuren 1: zeigen ein Array mit interdigitalen Ultramikroelektroden mit paarweisen Mikroelektroden und Details einzelner Sensorpositionen.
- Figuren 2: zeigen Anordnungen und Kombinationen verschiedener Formen von Ultramikroelektroden und Hilfselektroden einer einzelnen Arrayposition.
- Figur 3: zeigt ein Schema eines Arrays von Paaren interdigitaler Ultramikroelektroden mit aktiven CMOS-Schaltlelementen zur Addressierung und Kontrolle der individuellen Elektrodenpolarisation sowie externen Lese- und Meßverstärkern.
- Figur 3a: ist eine Ausschnittsvergrößerung einer Sensorposition aus der Figur 3, wobei sämtliche mögliche Schaltpfade zu den beiden Ultramikroelektroden gezeigt sind, hier aber der Schaltpfad über den Schalter 12 (integrierte Schaltung im adressierten Zustand) durchgeschaltet ist. Der gestrichelt gezeichnete Schaltpfad 13 ist nicht durchgeschaltet, also gesperrt.
- Figur 4: zeigt ein Schema eines Arrays von Paaren interdigitaler Ultramikroelektroden mit aktiven CMOS-Schaltlelementen zur Addressierung und Kontrolle der individuellen Elektrodenpolarisation, mit Kontrollverstärker, Lese- und Steuereinrichtungen 22,23 an jeder Sensorposition sowie externen Lese- und Meßverstärkern.
- Figur 5: zeigt ein Schema der Anordnung von Arrayelektroden und integrierten-CMOS-Elementen.

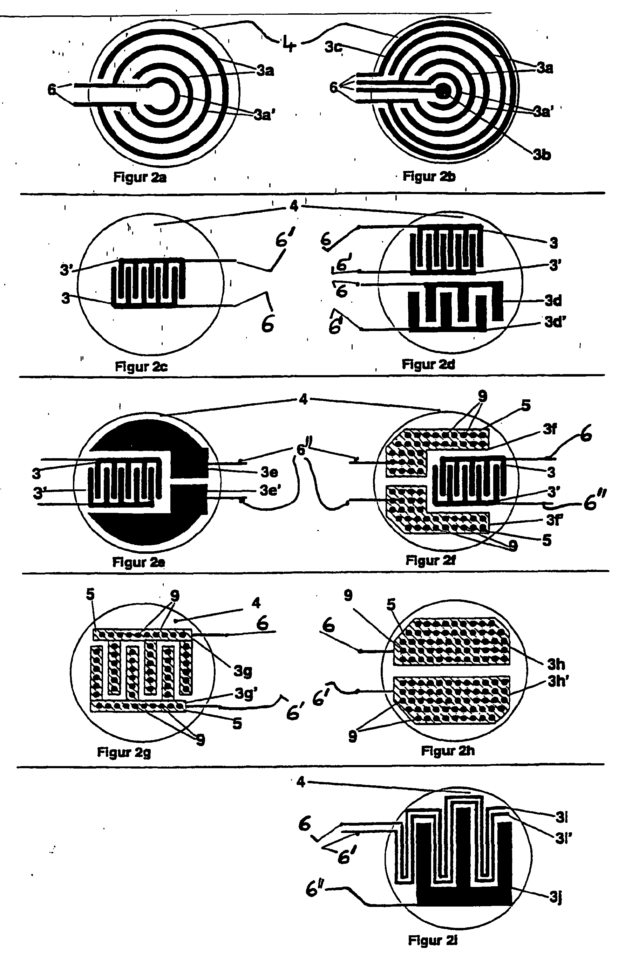

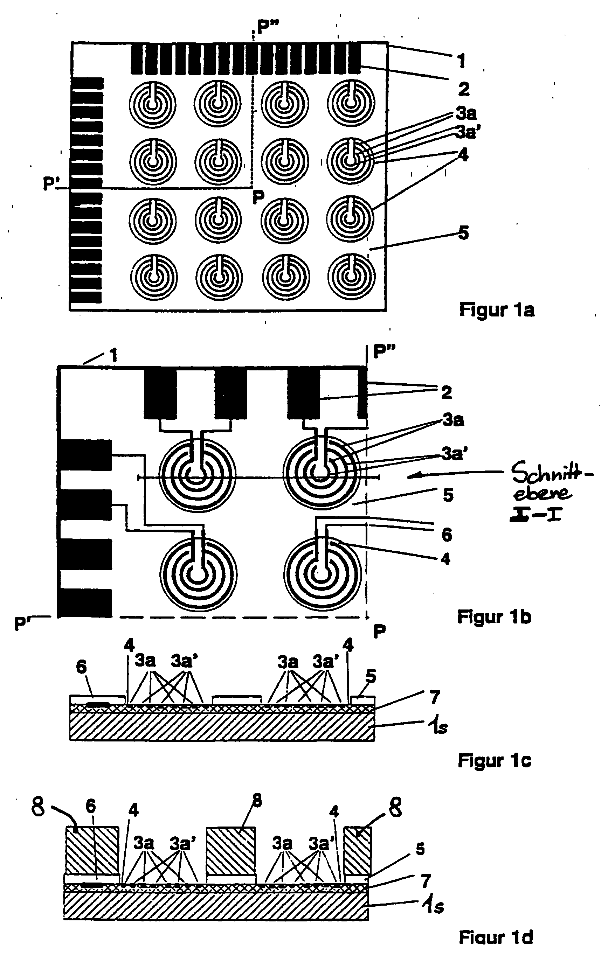

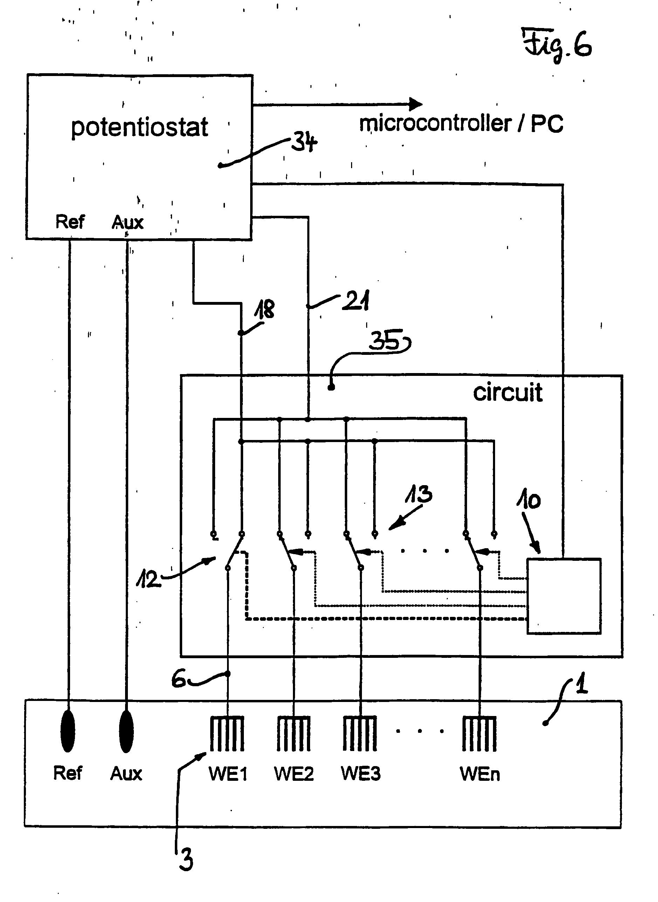

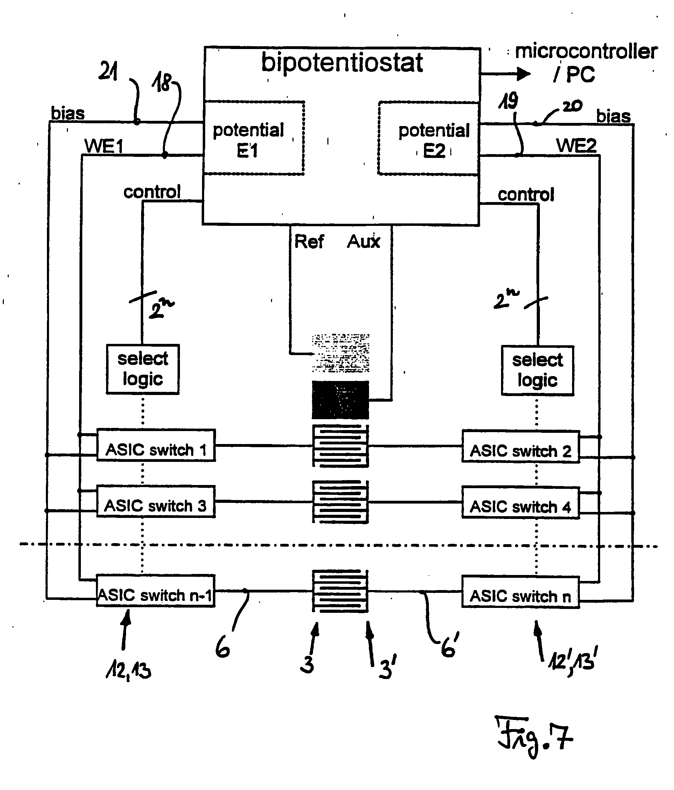

- Figur 6: veranschaulicht die Ansteuerung eines Elektrodenarrays gemäß Figuren 1, wobei die Schalter 12 und 13 schematisch eingezeichnet sind, angesteuert über einen Multiplexer 10 (1 aus n-Dekoder). Ersichtlich ist, daß diejenigen Meßzellen (hier mit WE1, WE2, WE3 bezeichnet), die nicht zum Auslesen aktiviert ist, mit den Schaltelementen 13, die ebenso aufgebaut sein können, wie aus Figur 3, 4 und 5 ersichtlich, an einen Ruhepotential gelegt sind. Das Schaltelement WE1 ist aktuell adressiert dargestellt, durch einen Schaltzustand 12, entsprechend dem Schalter 12 der Figur 3 und seines Schaltpfades.
- Figur 7: zeigt eine voltammetrische Meßschaltung mit Elektrodenarrays zum Redox-Recycling entsprechend dem später erläuterten Anwendungsbeispiel 10, zur Ansteuerung des Arrays nach Figuren 1 oder Figur 3.
- Figur 8: veranschaulicht die integrierten Schalter 12, 13, der Figuren 3 und 4 in einer schematischen Darstellung mit mehreren CMOS-Schaltem, die über die Adressenleitungen 14 ansteuerbar sind.
- Figur 8a: veranschaulicht das in Figur 3a hervorgehobenen Beispiel aus der Figur 3 mit CMOS-Schaltem (als Transmission Gates) entsprechend Figur 8.
- Figur 9: zeigt Meßkurven des elektrochemischen Redox-Recycling von p-Aminophenol, die entsprechend dem Anwendungsbeispiel 16 erhalten werden. Jede der eingezeichneten Langzeit-Kurven K1 bis K8 besteht aus mehreren Meßpunkten, hier interpoliert und von einem Meßrauschen überlagert dargestellt. Die Meßzeit pro Punkt beträgt zwischen 20 msec und 100 msec.

### Einige Bezugszeichen aus den Figuren.

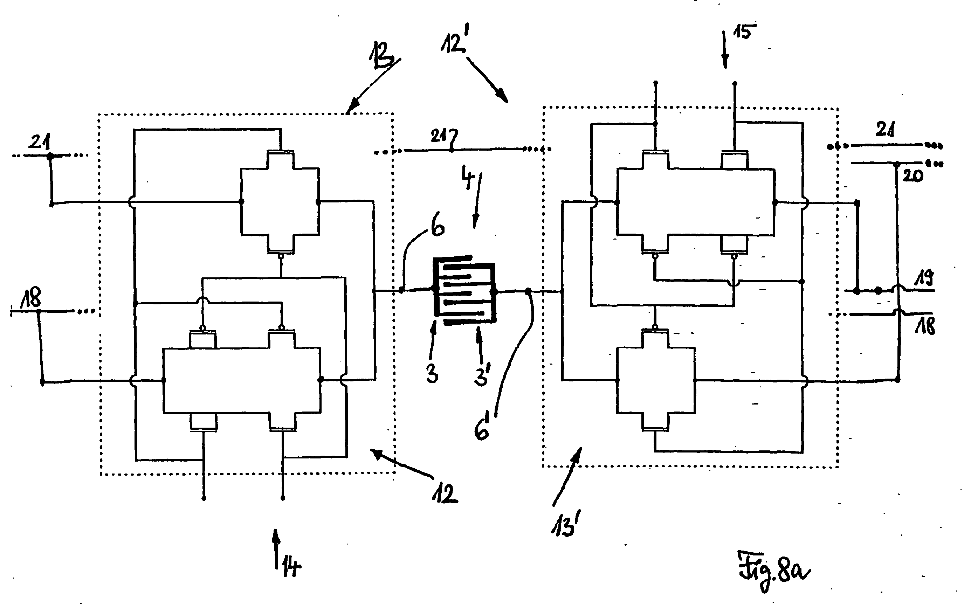

- 1: planarer Träger
- 1s: Siliziumsubstrat
- 2: Kontaktflächen
- 3a: ringförmiges Ultramikroelektrodensystem
- 3a': ringförmiges Ultramikroelektrodensystem
- 3b: Hilfselektrode
- 3c: Hilfselektrode
- 3, 3': interdigitales Ultramikroelektrodenpaar
- 3d, 3d': Interdigitalelektrodenpaar
- 3e, 3e': Hilfselektrodenpaar
- 3f, 3f: Ultramikroelektrodenarray
- 3g, 3g': Interdigitalelektrodenpaar mit Ultramikroelektrodenarray
- 3h, 3h': Elektrodenpaar mit Ultramikroelektrodenarrays
- 3i, 3i': mäanderförmige Ultramikroelektroden
- 3j: Hilfselektrode
- 4: Areale der Sensorpositionen
- 5: Abdeckung der Elektrodenzuleitungen und Steuerleitungen
- 6,6': Metallische Leitungsbahnen zu den Elektroden 3.3'
- 6": Metallische Leiterbahnen zu den Hilfselektroden
- 7: Siliziumdioxid
- 8: Kompartimentmaterial
- 9: punktförmige Ultramikroelektroden
- 10: elektronische Vorrichtung zur Adressierung und Dekodierung
- 11: elektronische Einrichtung mit Leseverstärkem
- 12, 12': integrierte Schaltung im adressierten Zustand
- 12a, 12a': Durchkontaktierung
- 13, 13': integrierte Schaltung im nicht adressierten Zustand
- 13a, 13a': Durchkontaktierung
- 14: aktive Adreßleitung A
- 15: aktive Adreßleitung A'
- 16: inaktive Adreßleitungen B
- 17: inaktive Adreßleitungen B'
- 18: Meßleitung Signal C
- 19: Meßleitung Signal D
- 20: Bias-Leitung Signal E
- 21: Bias-Leitung Signal F
- 22, 22': adressierte integrierte Lese-, Verstärker- und Speicherelektronik
- 23, 23': nicht adressierte integrierte Lese-, Verstärker- und Speicherelektronik
- 24: CMOS-Wanne
- 25: Source
- 26: Drain
- 27: CMOS-Aluminium
- 28: CMOS-Dielektrikum
- 29: flüssigkeitsresistente Passivierung
- 30: Goldelektrode
- 31: Polysilizium-Gate
- 31 a: Polisilizium-Leiterbahn
- 32: Kreuzung von Adreßleitung und Meßleitung
- 33: Kapazitätskompensierter Schalter (Fig. 8)

In **Figur 1a** ist ein Siliziumchip dargestellt, bei dem auf jeder Arrayposition 4 (Sensorposition) jeweils 1 Paar ringförmiger Mikroelektroden 3a und 3a' angeordnet sind, die durch direkte Leiterbahnen zu elektrischen Verbindungskontaktflächen 2 am Rande des Chips verlaufen. In **Figur 1b** ist eine Detailvergrößerung des Chips des Arrayelementes aus Figur 1a im Ausschnitt PP' dargestellt. Von jeder Arrayposition 4 werden die Ringelektroden 3a und 3a' zu jeweils einer individuellen Kontaktfläche 2 am Rande des Chips über die Leitungen 6 geführt. Die Leiterbahnen 6 sind dabei von einer flüssigkeitsdichten Isolationsschicht 5 bedeckt. Ein Querschnitt dieser Abbildung entlang der Schnittlinie I-I ist in **Figuren 1c und 1d** dargestellt. Auf dem Silizium-Substrat 1 ist eine isolierende Schicht aus Siliziumdioxid 2 aufgebracht, die die Elektroden 3a und 3a' sowie die Leiterbahnen 6 als Dünnfilmmetallstrukturen trägt. Durch die isolierende Abdeckung 5 werden die Leiterbahnen 6 bedeckt, während die aktiven Elektroden 3a und 3a' in den Arraypositionen 4 frei bleiben. Die Abdeckung 5 dient auch zur Abgrenzung zwischen den Elektroden der einzelnen Arraypositionen. In Figur 1 d ist der Querschnitt l-l dargestellt, mit einer zusätzlichen dickeren Polymerschicht 8, die zur Ausbildung von Mikrokompartments (Kompartiments) oder Distanzringen an den Arraypositionen mit den Ringelektroden 3a und 3a' dienen.

In den Figuren 2 sind einzelne Arraypositionen 4 mit verschiedenen Anordnungen der Ultramikroelektroden und Hilfselektroden dargestellt. **Figur 2a** zeigt im Detail ein Paar ringförmige Ultramikroelektroden 3a und 3a' mit den Verbindungsleitungen 6 auf einer Arrayposition 4 entsprechend Figur 1a. In **Figur 2b** sind ringförmige Bandelektroden 3a und 3a' sowie 3c angeordnet und zusätzlich eine zentrale kreisförmige Hilfselektrode 3b im Zentrum dieser Bandelektroden. **Figur 2c** zeigt im Detail ein Paar Ultramikroelektroden 3 und 3' mit den Ableitungen 6, 6' auf der Arrayposition. **Figur 2d** zeigt 2 Paare interdigitaler Uttramikroelektroden unterschiedlicher Geometrie mit schmalen Elektrodenstrukturen 3 und 3' und vergrößerten Strukturen 3d und 3d' mit individuellen Verbindungsleitungen 6. In **Figur 2e** ist ein interdigitales Ultramikroelektrodenpaar 3 und 3' mit zwei metallischen Hilfselektroden 3e und 3e' angeordnet; die Verbindungsleitungen der Hilfselektroden sind 6". **Figur 2f** zeigt ein Paar interdigitaler Ultramikroelektroden 3 und 3' und zwei flächige Hilfselektroden 3f und 3f, die von der isolierenden Schicht 5 bedeckt sind. In dieser Abdeckung 5 sind punktförmig aktive Elektrodenflächen 9 freigelegt, die parallel geschaltet sind. In **Figur 2g** ist ein interdigitales Elektrodenpaar 3g und 3g' mit analogem Aufbau wie die Hilfselektroden 3f und 3P dargestellt. Die punktförmigen Elektroden 9 sind entsprechend der Fingerstruktur elektrisch miteinander verbunden. **Figur 2h** zeigt ein Paar flächiger Elektroden 3h und 3h', die ebenfalls von einer Abdeckschicht 5 bedeckt sind, und Öffnungen mit aktiven punktförmigen Elektroden 9 aufweisen. In Figur 2i ist ein mäanderförmiges Elektrodenpaar 3i und 3i' mit einer flächigen (W-förmigen) Hilfselektrode 3j kombiniert.

Die obigen Darstellungen in allen Figuren 2 (die Figuren 2a bis Figur 2i) sind der Vereinfachung halber funktionell beziffert. Jeweilige Verbindungsleitungen, die zu den Hauptelektroden 3,3' führen, sind mit 6, 6' bezeichnet, unabhängig davon, welche jeweilige geometrische Struktur die Hauptelektroden besitzen. Die Verbindungsleitungen zu den Hilfselektroden sind mit 6" bezeichnet, auch unabhängig davon, wie die Geometrie und die Gestaltung der Hilfselektroden jeweils ist. Für die folgende Beschreibung wird von Hauptelektroden 3, 3' ausgegangen und die Verbindungsleitungen ebenfalls funktionell jeweils mit 6, 6' bezeichnet, auch wenn an verschiedenen Arraypositionen unterschiedliche Verbindungsleitungen vorhanden sind. Funktionell gedacht sind bei einer Vielzahl gleichgestalteter Arraypositionen (Sensorpositionen) praktisch alle Arraypositionen gleich, nur unterschiedlich auf dem Substrat 1 plaziert, so daß es für das Gesamtverständnis als hilfreich angesehen wird, wenn funktionell gleiche, Elemente auch mit denselben Bezugszeichen durchgängig bezeichnet werden. Gleiches gilt für die weiter unten erläuterten CMOS-Schalter 12,13, die mit ihrem Schaltzustand beziffert werden.

In **Figur 3** ist ein Array mit Paaren von interdigitalen Ultramikroelektroden 3,3' gezeigt, wo Adressierung und Steuerung der Elektrodenpolarisation durch CMOS-Schalter 12,12' und 13, 13' im Siliziumchip 1 an jedem einzelnen Interdigitalsystem 3 und 3' (Sensorposition 4) angeordnet sind. Die flüssigkeitsdichte Abdeckung 7 liegt über dieser Schafterebene. Die Leitungen 6,6' in der Ebene der Ultramikroelektroden führen an den Stellen 12a, 12a' und 13a, 13a' durch Öffnungen in der isolierenden Abdeckschicht 7 (Figur 1) zu der tiefer liegenden Ebene der CMOS-Schalter.

Von einer auf dem Silizium-Chip angeordneten elektronischen Adressiereinheit 10 werden die Adreßleitungen 14 und 15 bzw. 16 und 17 angesteuert.

Die Schalter 12, 12' zeigen einen aktivierten Schaltzustand beim Auslesen einer Spalte von Ultramikroelektroden-Paaren. Die adressierten Ultramikroelektroden sind mit den Meßleitungen 18, 19 verbunden. Die Leitungen 18, 19 führen zu einem Leseverstärker 11. Die Schalter 13, 13' sind in Ruhestellung, die nicht adressierten Ultramikroelektroden sind mit Bias-Leitungen 20, 21 verbunden.

Die oben beschriebenen Meßleitungen, Bias-Leitungen und Adreßleitungen sind mit Signalen belegt, die zu unterschiedlichen Zeiten aktiv sind. Die Adreßsignale A, A' sind das Aktivierungssignal für die linke (vertikale) Spalte der Sensorpositionen 4, hier die Sensorpositionen 100 und 110. Das Adressignal A aktiviert den Schalter 12, der die Elektrode 3 über die Leitung 6 und die Durchkontaktierung 12a an die Meßleitung 18 koppelt. Das Adressignal A' aktiviert den Schalter 12', der die gegenüberliegende Elektrode 3' über die gegenüberliegende Leitung 6', die gegenüberliegende Durchkontaktierung 12a' an die zweite Meßleitung 19 legt. An den Meßleitungen 18,19 entsteht das Meßsignal C, D, das von dem Meßverstärker 11 empfangen, gespeichert und/oder ausgewertet werden kann. In gleicher Weise arbeiten die nicht aktivierten Spalten von Sensorpositionen 101,111 und 102,112, die in der Mitte und rechts in Figur 3 gezeigt sind. Am Beispiel soll die mittlere, obere Sensorposition 101 beschrieben werden, bei der das Adressignal B den Schalter 13 so einschaltet, daß die Elektrode 3 über die Leitung 6, die Durchkontaktierung 13a auf das Biaspotential E der Leitung 21 geschaltet wird. Der zu der Durchkontaktierung 13a führende Schalter 12 ist deaktiviert, so daß keine Meßsignale von dieser, in deaktiviertem Zustand befindlichen Arrayposition erhalten werden. Auf der gegenüberliegenden Seite, bei der Elektrode 3', die über die Leitung 6', die Durchkontaktierung 13a' und den Schalter 13' an die Biasleitung 20 mit Potential F gelegt wird, geschieht dasselbe. Auch hier ist der zugehörige Schalter 12' deaktiviert. Die nicht adressierten Sensorpositionen werden also über die Schalter 13, 13' mit den Biasleitungen 20, 21 verbunden, so daß die Elektroden 3, 3' nicht einem beliebigen Potential überlassen sind, sondern einem von außen fest vorgegebenen Potential.

Für die Figur 3 und auch für die weiter unten beschriebene Figur 4 ist folgendes zu berücksichtigen. Zur Veranschaulichung des eingeschalteten Zustandes zum Messen (Leitungen 18, 19 mit Signal potentialen C, D) und der "abgeschalteten Zustände" (Bias-Leitungen 20, 21, mit Signalen E, F) ist eine jeweilige Sensorposition 4 nur so eingezeichnet, daß ihr aktueller Schaltzustand der Schalter 12, 12' bzw. 13,13' verdeutlicht ist. Auf dem ganzen Chip ist aber jede Sensorposition so ausgestaltet, wie eine überlagerte Fassung des linken oberen und mittleren oberen Sensorarrays, besitzt also zwei Schalter 12, 12' zum Schalten einer und derselben Sensorposition 4 auf die Meßleitung 18, 19 und zwei Schalter 13, 13' zum Schalten derselben Durchgangsstellen 12a,12a' auf die Bias-Leitungen 20, 21 bei abgeschalteten unteren Schaltern 12,12'. Nur einer dieser Schalterpaare ist jeweils aktiv, so wie in Figur 3 für unterschiedliche Sensorpositionen 4 eingezeichnet. Mit anderen Worten werden die Interdigitalelektroden 3, 3' mit den unteren beiden Schaltern 12, 12' an die Meßleitungen 18, 19 gelegt, von denen mehrere beabstandet parallel verlaufen, für jede Reihe von Interdigitalelektroden. Dabei werden die Schalter 12 und die Schalter 12' in einer vertikalen Reihe über die Adreßleitungen 14, 15 bzw. die Adreßsignale A, A' eingeschaltet-Gleichzeitig sind die Adreßteitungen B,-B' für die anderen Interdigital-Spalten auch vorhanden, nur haben sie einen anderen Schaltzustand, so daß die zu denselben, gerade beschriebenen Interdigitalelektroden gehörenden Schalter 13, 13' eingeschaltet sind. Bei einem Wechsel, also bei einem Abschalten der zur Messung führenden Schalter 12, 12' schatten die zur Bias-Leitung 20, 21 führenden Schalter 13, 13' ein und sorgen dafür, daß eine kontrollierte und störungsfreie Umschaltung von Meßzu Erhaltungspoteritial stattfindet. So lange, wie das Erhaltungspotential der Leitung 20, 21 an den Elektrodenpaaren 3, 3' anliegt, und das sind all diejenigen Elektrodenpaaren, die nicht in einer gerade adressierten vertikalen Spalte liegen, findet keine Störung der Polarisation statt und es finden keine Umladungsprozesse statt. Das erlaubt eine zwischenzeitliche Erfassung während des nicht ausgelesenen (zum Auslesen adressierten) Zustandes, so daß während des nicht ausgelesenen Zustandes keine nutzlose Zeit verstreicht, die nicht zur Erfassung eines Signals dient Das Signal wird vielmehr auch hier erfaßt und in gemäß Figur 4 beschriebenen Schaltungen 23, 23' gespeichert, um es später, bei einem nächsten Adressiervorgang auslesen zu können.

In Figur 4 ist ein Sensor-Array mit Paaren von interdigitalen Ultramikroelektroden gezeigt, das der Anordnung nach Figur 3 entspricht Die oval umrandeten Bereiche 22, 22' und 23,23' sind elektronische Schaltungen mit Integratoren als Meßwertspetchern, weiche die Stromwerte der benachbarten Ultramikroelektroden 3, 3' speichern. In den Gebieten 23, 23' wird über die Adreßleitungen 16, 17 das Signal zur Durchführung einer Integration angelegt und die Ultramikroelektroden mit den Bias-Leitungen 20, 21 verbunden. In den Bereichen 22, 22' ist durch die Signale der Adreßleitungen 14, 15 die Ausgangsspannung eines Integrators an die Meßleitungen 18, 19 gelegt.

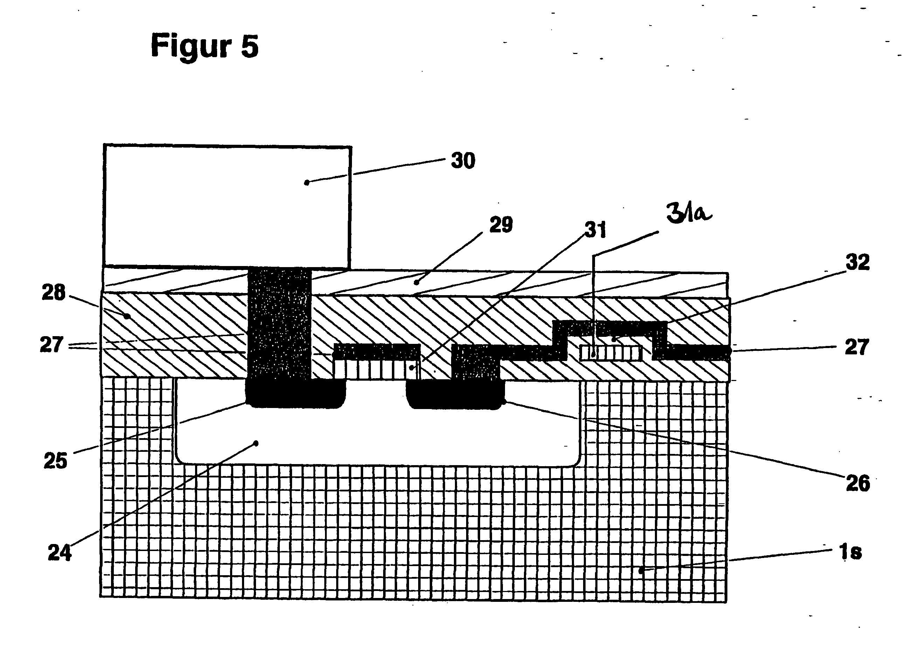

In Figur 5 ist in Silizium 1 s als planarem Träger eine CMOS-Wanne 24 mit Source 25 und Drain 26 integriert. Ein Gate und Leiterbahnen aus Polysilizium 31 verbinden zusammmen mit CMOS-Aluminium 27 im CMOS-Dielektrikum 28 die chip-intemen Elemente. Ebenfalls mittels Aluminium ist die Source 25 mit der Goldelektrode 30 durch eine flüssigkeitsdichte Siliziumnitrid-Passivierung 29 hindurch elektrisch verbunden. In einem Kreuzungsbereich 32 kreuzen sich z.B. Leiterbahnen wie die Adreßleitung 15 mit der Meßleitung 18 gemäß Figur 4.

### Bevorzugte Anordnungen

Für die Konstruktion des elektrischen Sensorarrays werden planare Träger bzw. Substrate aus verschiedenen Materialien verwendet. Ein besonders günstiges Material ist Silizium, weil mit den eingeführten technologischen Methoden der Halbleiterfertigung die erfindungsgemäßen Ultramikroelektrodenarrays in Dünnfilmtechnologie und in Waferprozessen hergestellt werden können. Diese Methode ist variabel und preisgünstig, wenn Arraypositionen mit geringer Dichte, d. h. ca. -10 - 30 Arraypositionen pro elektrisches Sensorarray hergestellt werden sollen, so daß wie in Figuren 1 dargestellt, die Ultramikroelektroden über isoliert verlaufende direkte Kontaktierungen mit Kontaktflächen am Rand des Chips verbunden werden.

Wenn zur Ansteuerung individueller Positionen des Sensorarrays für eine Steuerung und Schaltung sowie Auslesung der einzelnen Positionen zusätzliche elektronische Elemente wie Transistoren, Dioden, Widerstände und Kondensatoren integriert werden, wie in Figuren 3 und 4 dargestellt, ist die Siliziumtechnologie sehr günstig. Silizium als planares Trägerelement wird insbesondere auch dann verwendet, wenn mehr als ca. 60 Arraypositionen pro Sensorelement oder eine sehr dichte Anordnung dieser Positionen erreicht werden soll.

Bei direkter elektrischer Kontaktierung ist die Verwendung von Glas und glasähnlichen Substanzen sowie Keramik und auch den besonders verschiedenen Arten von Polymeren als planarer Täger möglich. Alle Substrate müssen dabei die Eigenschaft aufweisen, daß metallische Leiterbahnen und die strukturierten Ultramikroelektroden auf ihnen haftfest aufgebracht werden können. Das halbleitende Silizium wird durch dünne Schichten aus Siliziumdioxid oder Siliziumnitrid oder deren Gemische isoliert. Auf den Einzelpositionen des elektrischen Sensorelements werden die Ultramikroelektroden und bedarfsweise Hilfselektroden oder Hilfsflächen aus Metallen durch Aufdampfen oder Aufsputtern von Edelmetallfilmen wie Gold, Platin oder Iridiurn aufgebracht und üblicherweise durch photolithographische Prozesse und/oder Naß- bzw. Trockenätzen strukturiert. Mit Hilfe dünner Haftschichten aus Chrom oder Titan oder Tantal oder anderen ähnlichen Metallen wird die Haftung dieser Edelmetalle zum planaren Substrat verbessert. In besonderen Ausführungsformen werden nm-strukturierte Ultramikroelektroden in die lsolatorschichten eingelegt und damit zum Zwecke hoher Chipausbeuten und Kurzschlußfestigkeit planarisiert.

Die für die Detektion verwendeten Ultramikroelektroden, gemäß Figuren 2 sind mindestens paarweise angeordnet und können als interdigitale Ringstrukturen 3a, 3a', 3b, 3c, als interdigitale Strukturen verschiedener Geometrien 3, 3', 3d, 3d' 3g, 3g' in einfacher oder mehrfacher Ausführung oder auch als Mäander 3i, 3i' angeordnet sein. Sie können zusammen mit Flächen diskförmiger Ultramikroelektroden sowie auch zusammen mit Hilfselektroden in verschiedensten Kombinationen benutzt werden.

Die bandförmigen Elektrodenstrukturen, die paarweise als kreis- oder spiralförmige oder interdigitale oder mäandrische Anodnungen ausgeführt sind, werden bevorzugt für das Redox-Recycling als Detektionsverfahren benutzt und photolithografisch in Dimensionen zwischen 200 nm und 800 nm gefertigt, sind aber prinzipiell auch sowohl in größeren als auch in kleineren Dimensionen geeignet.

Analoge Elektrodenstrukturen unter 500 nm Strukturbreiten, bevorzugt zwischen 100 und 300 nm, werden zur markerfreien Detektion der Affinitätsbindung großer Moleküle an die eiektrodengebundenen Fängermoleküle mittels Impedanzspektroskopie gefertigt.

Eine besondere Eigenschaft der bandförmigen paarweisen Ultramikroelektrodenstrukturen und auch der in großer Nähe angeordneten zusätzlichen Elektroden ist die Erzeugung hoher elektrischer Felder mit Feldstärken bis zu mehreren Megavolt pro m mit relativ geringen Spannungen von typischerweise 0,5 bis 20 V. Die elektrischen Felder zwischen sub-µm-Elektroden verlaufen nur in allernächster Nähe der Elektroden und durchdringen damit bevorzugt die aufliegenden Molekülschichten, erfassen aber vergleichsweise wenig von der umgebenden Elektrolytlösung.

Dies wiederum gestattet, einen elektrophoretischen Transport von Molekülen schon mit Spannungen von wenigen Volt und damit einem erheblich niedrigeren Spannungsbedarf als bei den sog. Makroelektroden mit Abmessungen typischerweise über 10 µm zu realisieren. Auch durch höhere Spannungen hervorgerufene störende Vorgänge wie Elektrolyse, pH-Gradientenerzeugung u.a. werden auf diese Weise reduziert oder verhindert.

Bei mehrfacher Anordnung paarweiser Ultramikroelektroden, wie in Figur 2b gezeigt ist eine wahlweise Felderzeugung zwischen den verschiedenen Elektroden möglich. Auch die Möglichkeit von Differenz- oder Brückenschaltungen bei der elektrochemischen Detektion ergibt meßtechnische Vorteile zur Kompensation von Störungen. So sind die in Figur 2d dargestellten zwei Paare interdigitaler Ultramikroelektroden mit unterschiedlichen Geometrien für Differenzschaltungen auf Grund unterschiedlicher Detektionseigenschaften, wie die Amplifikationsrate beim Redox-recyling, geeignet

Auch unterschiedliche organische Beladungen erfüllen diesen Zweck einer Differenzmessung. Mittels Abdeckung eines Paares durch galvanische Abscheidung von nicht Seff-asssembling-monoschichten ausbildenden Metallen, wie z.B. Nickel o.a., wird eine Immobilisierung verhindert. Auch nachträgliche individuelle Entfernung der Immobilisierungsschicht auf einer Elektrode z.B. durch Desorption einer Self-assembling-Schicht mittels elektrischer Oxidation auf einem dieser Elektrodenpaare kann für solche Differenzmessungen genutzt werden.

Die Erzeugung 1 bis 2 µm großer punktförmiger Ultramikroelektroden 9 auf den in der übrigen Fläche isolierten Arrays, wie in Figuren 2f, 2g und 2h dargestellt, dient optimaler hemisphärischer Diffusion von elektrodenaktiven Partikeln zu den Elektrodenflächen. Diese hemisphärische Diffusion bewirkt an den punktförmigen Elektroden eine mehr als zehnfach höhere,Stromdichte pro Fläche sowohl bei der Detektion als auch bei der Applikation von elektrischen Feldern ,verglichen mit Makroelektroden.

In einer besonderen Ausführungsform können diese punktförmigen Elektroden wie auch die bandförmigen Elektroden gemäß Figuren 2a, 2b, 2c, 2d, 2e, 2f, 2h und 2i von einer dünnen Isolatorschicht auf einer oder beiden Elektroden eines Paares bedeckt sein und damit ein besonderes Meßelement zur Kapazitätsmessung immobilisierter oder an die Oberfläche anbindender Moleküle darstellen. Gleichermaßen ist durch solche Isolierung eines von zwei Paaren von Ultramikroelektroden eine Differenzmessung möglich.

Die Kombination eines Ultramikroelektrodenpaares mit flächenförmigen Hilfselektroden wie in Figur 2e dargestellt, wird verwendet zur Vergrößerung metallischer Bindungsflächen zur Immobilisierung von Molekülen. Gleichzeitig können diese Flächen wie 3e und 3e', aber auch zur Applikation von elektrischen Zusatzfeldern benutzt werden, um beispielsweise Moleküle in die Nähe der Detektionselektroden 3 und 3' zu transportieren oder bei der Beseitigung von unerwünschten Molekülen Feldunterstützung zu ermöglichen. In Figur 2f ist die Kombination eines interdigitalen Ultramikroelektrodenpaares mit Hilfselektroden 3f, 3f gezeigt, die mit den beschriebenen punktförmigen Elektroden besetzt sind. Dabei werden die für band- und punktförmige Elektroden vorstehend beschriebenen unterschiedlichen Eigenschaften der Ultramikroelektroden kombiniert.

In einer besonderen Ausführungsform, wie in Figur 2h dargestellt, werden flächenförmige Elektroden mit ultramikroelektrodenförmigen Punkten 9 besonders zur Anwendung für die Impedanzspektroskopie benutzt. Dabei können immobilisierte Moleküle sowohl über den gesamten Elektrodenflächen oder in den Zwischenräumen oder auf den aktiven Elektrodenoberflächen spezifisch gebunden sein. In einer anderen Ausführungsvariante werden die Moleküle auf den vorgenannten dünnen lsolatorschichten über den Elektroden immobilisiert.

Weitere Kombination von Elektrodenformen und damit deren Eigenschaften wie z. B. die Doppelanordnung der Elektrodenpaare 3, 3' oder die Kombination von 3a, 3a' mit 3e, 3e' oder 3e, 3e' mit 3g, 3g' und andere sind dabei möglich.

Eine besondere Ausführungsform sind die ringförmigen Ultramikroelektroden 3a, 3a' in Figuren 1, 2a und 2b, die im Prinzip analoge Eigenschaften wie die Paare interdigitaler Mikroelektroden 3 und 3' zeigen, aber effektiver die Ausnutzung der Sensorarrayfläche gestatten und die Applikation zentraler 3b und äußerer Hilfselektroden 3c ermöglichen, die für Feldverteilung und Felderzeugung von Bedeutung sind. Mit letzterer Anordnung läßt sich ein käfigähnliches Feld über z.B. zeitweise inaktiven Elektroden 3a, 3a' erzeugen und gezielt Moleküle in diesen Bereich hereinziehen oder abstoßen.

Die in Figur 2i dargestellten mäanderförmigen Elektroden 3i und 3i' entsprechen in ihren Eigenschaften den ringförmigen- und den interdigitalen Bandelektroden und können ebenso mit den Hilselektroden 3j für Differenzmessungen oder zur Felderzeugung kombiniert werden.

Eine spezielle, nicht in den Abbildungen dargestellte Form bandförmiger Elektroden ist die spiralförmige Anordnung der Ultramikroelektroden, bei denen parallele Elektrodenbänder von außen nach innen oder von innen nach außen laufen und zu getrennten Kontaktleitungen führen. Auch die spiralförmigen Ultramikroelektroden können wieder mehrfach als Paare mit unterschiedlichen Geometrien kombiniert werden, gegebenenfalls auch mit zusätzlichen Hilfselektroden, entweder flächenförmig oder entsprechend 3b und 3c.

Sowohl die ringförmigen als auch die kreis- und spiralförmigen Ultramikroelektroden können in Analogie zur Figur 2g mit punktförmigen Ultramikroelektroden zusätzlich strukturiert sein und weisen dann auch analoge Eigenschaften auf.

Eine besondere Ausführungsform der Ultramikroelektrodenarrays entsteht nach Anspruch 7 dadurch, daß auf den einzelnen Positionen bandförmige Elektroden, wie in Figuren 2a, 2b, 2c, 2d oder 2i, oder flächenförmige Elektroden analog Figur 2e, mehrfach übereinander gestapelt werden und die dann von isolierenden Zwischenschichten wie Siliziumdioxid, Siliziumnitrit, Siliziumoxinitrit voneinander isoliert sind. Dazu wird das Aufdampfen von Metallen und die PECVD-Abscheidung der lsolatorschichten kombiniert. Diese gestapelten Elektroden sind typischerweise 10 - 200 nm dick und bewirken an den Schnittkanten eines solchen Stapels, der von einem Isolationsmaterial bedeckt ist, ein Ultramikroelektrodenverhalten, wo allerhöchste Annäherung der Elektroden und die Erzeugung ultrahoher Feldstärken erreicht werden. Die einzelnen Schichten werden bei dieser Anordnung unter einer isolierenden Bedeckung seitlich zu Kontaktflächen einzeln und individuell herausgeführt.

Prinzipiell ist es auch möglich, die in den Figuren 2' gezeigten und vorstehend beschriebenen Ultramikroelektroden und Hilfselektrodenstrukturen mit metallischen Flächen zu kombinieren, die keinen elektrischen Anschluß tragen. Sie dienen dann z.B. als Areale zur Immobilisierung von affinitätsbindenden Molekülen. '

Die Ultramikroelektroden einer einzelnen Arrayposition werden mit metallischen Gesamtflächen von typischerweise 100 - 30 000 µm² ausgeführt und gestatten es daher, Arraypositionen mit sehr kleinen Abmessungen zu konstruieren, wobei die Abstände der Arraypositionen typischerweise den Abmessungen der aktiven Elektrodenflächen von 30 µm bis 300 µm entsprechen, aber auch wesentlich größer oder kleiner sein können, wenn Applikationen dies erfordern.

Wie in Figur 1d dargestellt, werden für spezielle Anwendungen, dies sind insbesondere quantitative voltametrische Meßverfahren wie das Redox-recyling, die Arraypositionen durch volumenseparierende Mikrokompartmentwände 8 voneinander abgetrennt. Im Falle qualitativer Detektion, wie lokale Impedanzspektroskopie an sensorgebundenen Fängermolekülen ist die Volumenseparierung in der Regel nicht erforderlich.

Volumenkompartimentierte Mikroareale werden auch dann benutzt, wenn Reaktionen und Molekülimmobilisierungen auf individuellen Arraypositionen ausgeführt werden sollen. Falls die Detektion dies erfordert, können diese Kompartments wahlweise nach ausgeführten Immobilisierungsreaktionen wieder entfernt werden. Damit ensteht ein ideal planares Sensorarray, das homogen sowohl für Analyt- als auch Reagenzlösungen zugänglich ist.

Mittels Stempel-, Piezo- oder Tintenstrahltechnik oder anderen Spottingverfahren, wie Mikrokapillardosierung können die zu immobilisierenden Moleküle ebenfalls auf den Sensorpositionen ohne Kompar6mentierung lokal positioniert werden.

Die zu immobilisierenden Fängermoleküle selbst werden nach bekannten Verfahren über bifunktionelle Reagenzien z.B. Alkyloxisilane mit verschiedenen funktionellen Gruppen wie Halogen-, Amino-, Thioester- und Aldehydgruppen, Succinimid-, Carbodiimid- und andere gebräuchliche Kopplungsgruppen [H.G. Bäumert and H. Fasold, Methods in Enzymology, Vol. 172, p. 584] an die Oberflächen der planaren Trägerelemente wie z.B. Siliziumdioxid, Glas, Keramik oder Polymere oder auch an die Wandungen der Si- oder polymeren Mikrokompartments gebunden.

Eine bevorzugte Immobilisierungsform ist die Nutzung der Gold- und Platinoberfläche als Immobilisierungsareal für Thiolderivate von Fängermolekülen, die sog. selbstorganisierende molekulare Monolayer auf diesen gut definierten Elektrodenoberflächen ausbilden [S.D. Evans et al., J. Amer. Chem. Soc. 113 (1991)5866].

In einer anderen Ausführungsform werden die im ganzen mit Self-assembling-schichten auf den Elektroden belegten Arraypositionen teilweise wieder gereinigt. Moleküle, die sowohl auf Detektions- als auch Hilfsflächen gemeinsam auf den Metalloberflächen immobilisiert wurden, können durch Applikation elektrischer Felder gezielt von den Detektorelektroden wieder desorbiert werden. Durch elektrische Potentiale wird die Desorption von Thiolen erreicht, so daß die Detektionselektroden frei von Beschichtungen werden. Sie können dann Produkte detektieren, die z.B. auf anderen Flächen der Sensorposition, wie den metallischen Hilfsflächen gebildet werden.

Alternativ zu den vorstehend beschriebenen lmmobilisierungen von affinitätsbindenden Molekülen auf den Elektroden oder Hilfselektroden oder metallischen Hilfsflächen bzw. den Wandungen oder anorganischen Teilflächen der einzelnen Sensorareale können diese affinitätsbindenden Moleküle wahlweise auch über den Sensorpositionen angeordnet und dazu an partikulären oder gelartigen Trägern gebunden werden. In dieser Form ist es möglich, die Produkte der Enzymmarker von biochemischen Assays , die an kugelförmigen oder partikelförmigen Polymeren oder metallischen oder mineralischen Partikeln gebunden sind, in den o.g. Mikrokompartments anzuordnen oder mechanisch, beispielsweise durch Einschluß zu fixieren. Auch die Fixierung magnetischer Trägerpartikel in den Mikrokompartments durch Magnete unterhalb der Chips ist geeignet, unterschiedliche Sensorpositionen zu beladen.

Auch das Einbringen von Gelen mit inkorporierten affinitätsbindenden Molekülen oder Molekülkomplexen in den Mikrokompartments zwischen den Wänden 8 oder über die gesamte Sensorfläche ist möglich. Solche Gele können üblicherweise durch Diffusion oder elektrisch unterstützte Diffusion wie bei der Gelelektrophorese mit biochemischen Assays oder Assaykomponenten beladen werden. Durch die Anordnung mehrerer Ultramikroelektroden an jeder Arrayposition ist dies im Gegensatz zu anderen beschriebenen Verfahren an jeder einzelnen Sensorposition unabhängig möglich.

In einer besonderen Ausführungsform werden die an er sensoroberfläche immobilisierten.Moleküle,1partiell in den Kompartments oder homogen über die gesamte Sensorfläche mit einem diffusiblen Hydrogel bedeckt. Das Gel wirkt als Schutzschicht oder erleichtert den Molekültransport durch Elektrophorese.

Die Anordnung immobilisierter biochemischer Assays an Partikeln oder in Gelen über den Elektroden wird dadurch möglich, daß Detektionsverfahren wie das Redox-Recycling, die niedermolekularen von den Assays produzierten und an die Elektroden diffundierenden Enzymprodukte messen, solange die Wassereinlagerung in den Gelen oder Zwischenräumen zwischen Pärtikeln eine Diffusion gestatten. Das Redox-Recycling selbst ist durch die geringen Distanzen, zwischen den Ultramikroelektroden dadurch ausgezeichnet, daß aufliegende Partikel oder Gele solche Detektionen nicht stören, da sie vorzugsweise in oder nahe der molekularen Doppelschicht, die durch Polarisation an den ElektrodenoberRächen entsteht, verlaufen, in gleicher Weise ist auch eine impedimetrische Detektion an den Ultramikroelektroden im Gegensatz zu üblichen Verfahren, die weit voneinander entfernte Elektroden nutzen [V.M. Mirsky et al. Biosensors & Bioelectronics 12,9-10(1997)977] weitgehend partikelunabhängig. Bei Ultramikroelektroden mit einem Elektrodenabstand von 200 nm und ca. 1 µm langen DNA-Molekülen, die an deren Oberfläche in größter Nähe zueinander affinitätsgebunden sind, verläuft das elektrische Feld zwischen 2 Bandelektroden im wesentlichen durch die Moleküle selbst, wobei weiter entfernte Partikel ebenso wie der Grundelektrolyt in der Lösung wenig Einfluß haben.

Eine individuelle Kontrolle elektrochemischer Prozesse zur Detektion an jeder einzelnen Arrayposition erfolgt unabhängig in der Weise, daß durch elektrisches Auslesen und damit verbundenes Schalten (Adressieren) diese Prozesse nicht gestört werden. Die Elektrodenpolarisation wie sie beispielsweise für das voltammetrische Redox-Recycling benötigt wird, wird an allen Sensorpositionen individuell erzeugt. Dies ist problemlos durch Multipotentiostaten mit direkten Leiterbahnen zu jeder Chiparrayposition und jeder Einzelelektrode simultan und parallel möglich, vgl. Hintsche et al., Biosensors & Bioelectronics, 9(1994)697. Da auf diese Weise die Zahl der möglichen Sensorpositionen sehr durch den elektronischen Aufwand beim Meßgerät begrenzt ist und auch durch die Zahl der Leiterbahnen limitiert ist, werden die einzelnen Detektorelektroden seriell, d. h. nacheinander vermessen. Dabei bleiben die elektrischen Potentiale zur Polarisation für Anode und Kathode beim Redox-Recycling auch dann erhalten, wenn die Elektroden einzeln nacheinander oder in Gruppen (Reihen oder Spalten) mittels individueller Schalter an ein Meßgerät über integrierte Meßleitungen auf dem Sensorchip angeschlossen werden.

In der einfachsten Ausführungsform mit direkter Kontaktierung der Elektrodenpositionen nach Figuren 1 wird dazu ein ASIC 35 "off Chip" benutzt. Bezüglich der Messung hat er die Funktionalität eines Multiplexers, d.h. die individuell mit dem ASIC verbundenen Sensorpositionen 4 werden seriell (nacheinander) adressiert und auf einen einzigen Bipotentiostaten 34 zur Auslesung geschaltet Die einzelnen Schalter des Multiplexers sind nicht als Ein-Aus-Schalter, sondern als Umschalter ausgelegt Im nicht adressierten (nicht ausgelesenen) Zustand verbinden sie die Sensorpositionen mit einer Biasspannung, die der Aufrechterhaltung der Elektrodenpolarisation während des Nichtlesezustands dient. Veranschaulicht wird dies mit Figur 6. Hier sind dieselben zuvor anhand der Figur 3 beschriebenen Schalterzustände eingezeichnet, so daß diese Figur selbsterklärend ist. Zum Potentiostaten gehören noch eine Referenzelektrode und Gegenelektrode (Ref und Aux), deren Verwendung bekannt ist. Die nur einseitigen Mikroelektroden als WE1, WE2, WE3 bis WEn entsprechen den Elektroden 3 von Figur 3. Der Multiplexer 10 entspricht der Adressensteuerung und der eingeschaltete Zustand entspricht dem adressierten oder Lesezustand, bei dem WE1 über den aktivierten Schalter 12 an die Leseleitung 18 gekoppelt ist. Alle anderen Sensorpositionen sind mit abgeschalteten Schaltern 12 und eingeschalteten Schaltern 13 an das Potential zur Elektrodenpolarisation geschaltet, das an der Leitung 21 anliegt. Die Schaltung 35 ist nicht im Bereich der Sensorpositionen, sondern außerhalb des Trägers 1 vorgesehen.

In einer komplexeren Ausführungsvariante wird die störungsfreie Umschaltung beim seriellen Adressieren eines größeren Arrays von Sensorelektroden, wie in Figur 3 dargestellt, dadurch erreicht, daß neben üblichen Adreß- und Meßleitungen, wie sie für elektronische Speicher seit langem verwendet werden, zusätzliche potentialführende Leitungen 20, 21 mit Biaspotentialen E, F bzw. Spannung E - F am Träger 1 angeordnet werden. Die Adressierung wird dabei von einem Adressierelement 10, das außerhalb des eigentlichen elektrischen Sensorarrays in Figur 3 angeordnet sein kann, über die Adreßleitungen 14/15 und 16/17 ausgeführt werden. Die Meßleitungen 18 und 19 in Figur 3 und die Biasleitungen 20 und 21 werden dabei von speziellen Leseverstärkern 11 ausgelesen, die ebenfalls außerhalb des eigentlichen elektrischen Sensorarrays angeordnet sind. Durch die parallelen Meßleitungen 18 werden dabei alle Elektroden 3 der unterschiedlichen Sensorpositionen zeilenweise erfaßt und individuell gemessen, während die parallelen Meßleitungen 19 alle Interdigitalelektroden 3' in Figur 3 zeilenweise (reihenweise) erfaßt und individuell messen kann. Alle Elektroden 3 werden von der Biasleitung 21 mit der gleichen Polarisationsspannung E, die z.B. für die Oxidation einer zu detektierenden Molekülart erforderlich ist, versorgt. In gleicher Weise können alle Elektroden 3' durch die Biasleitung 20 mit dem Potential F für die Elektrodenpolarisierung, das für eine Reduktion notwendig ist, versorgt werden.

Die an jeder Sensorposition 4 integrierten Umschalteinrichtungen 12 und 13 (als 12, 12' und 13, 13') bewirken dabei die Umschaltung zwischen einem Lese- und einem Nichtlesezustand. Beim Lesezustand, wird die ablaufende elektrochemische Reaktion einer Sensorposition meßtechnisch über ein Paar von Meßleitungen 18,19 erfaßt und gleichzeitig mittels des Multipotentiostaten gesteuert. Im Nichtlesezustands werden die elektrochemischen Vorgänge, z.B. Oxidation oder Reduktion, durch die im Abstand der Sensorpositionen parallelen Biasleitungen 21 für 3 und 20 für 3' kontinuierlich mit den Polarisationsspanungen versorgt und kontrolliert. ,

Die Schaltelemente 12, 12' und 13, 13' werden z.B. mit konventioneller CMOS-Technologie mit üblicher Halbleitertechnologie in Siliziumwafern an jeder Seonsorarrayposition 4 lokal angeordnet. Über diesen integrierten CMOS-Schaltem, an die Meß-, Bias- und Adreßleitungen geführt werden, befindet sich eine flüssigkeitsresistente Isolationsschicht, z.B. aus Siliziumoxinitrit, wahlweise in Kombination mit Siliziumdioxid. Der Kontakt zwischen den Schaltelementen 12 und 13 und den individuellen Elektroden 3 und 3', die in der beschriebenen Dünnfilmtechnologie auf dieser Isolationsschicht durch Elektronenstrahlverdampfen oder Sputtern und ähnliche Prozesse aufgebracht werden, wird durch eine senkrechte Durchkontaktierung zur CMOS-Elementebene im Silizium erzeugt. Alle Strukturen oberhalb dieser flüssigkeftsresistenten Isolationsschicht entsprechen den in Figuren 1 und 2 dargestellten Details mit dem Unterschied, daß die in Figuren 1 gezeigte direkte Kontaktierung durch Leiterbahnen entfällt. Die besondere Konstruktion der integrierten CMOS-Schalteinrichtungen 12 und 13 ermöglicht es, das Umschalten vom Lese- in den Nichbeseprozeß oder -zustand für die interdigitalen Ultramikroelektroden ohne Einfluß zu realisieren. Dies ist notwendige Voraussetzung für den gesamten meßtechnischen Prozeß, da sich durch die Elektrodenpolarisation an der Elektrodenoberfläche eine elektrochemische Doppelschicht ausbildet, die als eine Art chemisches Gedächtnis während des Schaltprozesses erhalten bleiben muß.

Der Umschaltprozeß dauert nur Mikrosekunden, so daß während dieser Zeit lokal vorhandene Elektrodenkapazitäten 33 als Spannungsspeicher wirken. Danach ist die Versorgung der Elektroden von den Meßleitungen 18 und 19 auf die Biasleitungen 20 und 21 mit Polarisationsspannung umgeschaltet. In **Figur 3** stellen die schwarzen Vollkreise 12, 12' diejenigen Schaltelemente dar, die im Lesezustand von den Meßleitungen 18 und 19 mit der Polarisationsspannung versorgt werden und durch diese Leitungen auch mit den Leseverstärkern zur Detektion des elektrochemischen voltametrischen oder impedimetrischert Ereignisses verbunden sind. Die Adressierung vom elektronischen Element 10 erfolgt dabei spaltenweise, so daß sich, wie schematisch dargestellt, mehrere Sensorpositionen 4 im Lesezustand befinden. Sie können durch das meßtechnische Element mit Leseverstärkern 11 nacheinander, mit einem Leseverstärker oder parallel mit zwei oder mehr Leseverstärkern ausgelesen werden bzw. der elektrochemische Vorgang verfolgt werden. Die spaltenweise Adressierung durch die parallelen Adreßleitungspaare 14, 15 erlaubt eine beliebige Verlängerung dieser als Spalte adressierter Sensorpositionen und beliebig viele Elemente, die jeweils wieder durch parallele Meßleitungspaare 18, 19 nacheinander oder parallel durch Leseverstärker ausgemessen werden können. Nach Beendigung des Meßereignisses an dieser senkrechten mit schwarzen Schaltelementen dargestellten Spalte von Sensorpositionen kann die benachbarte senkrechte Spalte mit den bisher inaktiven Schaltelementen 13, 13' durch das nächste Adreßleitungspaar 16, 17, die jeweils die Elektroden 3 oder 3' ansteuern, in die Meßposition wie vorstehend beschrieben umgeschaltet werden. Dies geschieht, nachdem die vorher in Lesezustand befindliche Spalte auf den Nichtlesezustand umgeschaltet wurde. So fortschreitend kann einzeln oder in Reihen jede Sensorposition adressiert und gelesen werden. Diese Meß-, Bias- und Adreßleitungen können in der Siliziumebene durch eine Mehrlagenverdrahtung realisiert werden, wie sie in der Siliziumtechnologie für elektronische Speicherbauelemente üblich ist.

Die Meß-, Bias- und Adreßleitungen sollen in Figur 3a an einem herausgezeichneten Array, der Sensorposition 100, verdeutlicht werden. In Figur 3 war nur eine betriebliche Darstellung gewählt, während in Figur 3a alle möglichen Schaltzustände eingezeichnet sind, die das Array 100 einnehmen kann. Zentral liegen die beiden Elektroden 3,3' mit ihren Zuführungen 6,6' und der Durchkontaktierung 12a,12a'. Eingezeichnet ist der adressierte Zustand, bei dem über die Schalterelemente 12,12' eine Kopplung der Elektroden 3,3' zu Meßleitungen 19,18 stattfindet. Diese Meßleitungen führen das Potential der Mikroelektroden aus dem Sensorarray heraus und machen es für die Meßeinrichtung 11 zugänglich. Die ebenfalls eingezeichneten und dasselbe Array 100 betreffenden nicht aktivierten Schalter 13,13' sind gestrichelt eingezeichnet. Sie sind erst dann aktiviert, wenn die Adreßleitungen 14 und 15 ihren Schaltzustand wechseln, so daß gleichzeitig der Schalter 12,12' abschaltet und die Schalter 13,13' einschalten. Koppeln letztere Schalter die Elektroden 3,3' von den Durchkontaktierungen 12a,12a' an die ebenfalls parallel verlaufenden Erhaltungsleitungen 20,21, so liegt eine erneute unmittelbare Kopplung der Elektroden zu einem Erhaltungspotential vor, ohne daß eine Unterbrechung der Spannungsversorgung eintrat.

Die Adreßleitungen 14,15 werden von der Spaltenadressiereinheit 10 so angesteuert, daß immer eine Spalte von Sensorpositionen in einem adressierten Zustand mit eingeschalteten Schaltern 12,12' ist, während alle übrigen Sensorpositionen durch ein jeweils invertiertes Signal auf den Leitungen 16,17 von Figur 3 abgeschaltet sind. Die Leitungen 16,17 entsprechen den Leitungen 14,15 funktionell, nur sind sie für die betriebliche Darstellung der Figur 3 mit einem anderen Bezugszeichen versehen; sie aktivieren die Schalter 13,13' und deaktivieren die Schalter 12,12'.

Schematisch ist mit einer Schaltertechnik in Figur 3a im unteren Teil der eingeschaltete Zustand bei geschlossenen Schaltern 12,12' gezeigt, während die Schalter zum Bereitstellen der Erhaltungsspannung 13,13' geöffnet sind. Die Adreßleitungen 14,15 werden dabei an der Sensorposition einmal invertiert, so daß beide Schaltzustände immer komplementär vorliegen und ein Wechsel des Schaltzustandes der Adreßleitung einen Wechsel in der Schalterstellung des einen jeweiligen Umschalter bildenden Schalterpaares 12,13 sowie 12',13' ermöglicht.

Die hier beschriebenen Umschalter finden auch bei der später folgenden Figur 4 Anwendung, zunächst soll hier aber das Verständnis der Umschalter dadurch vertieft werden, daß auf die **Figuren 8,8a** Bezug genommen wird. Diese Figuren sollen mit Bezug auf Figur 3 und die ohnehin schon herausvergrößerten Umschalter an der Sensorposition 100 und der Figur 3a erläutert werden. Die Sensorposition 100 ist in Figur 8 oben gezeigt, die Sensorposition 101 ist in Figur 8 unten gezeigt Symbolisch müßte die Figur 8 um 90° gedreht werden, so daß die Leitungen 18,21 als eine der Bias-Leitungen und eine der Meßleitungen mit den Figuren gleicher Bezeichnung von Figur 3 in ihrer Orientierung übereinstimmen. Figur 8 zeigt demgemäß nur den linken Schaltarm der Sensorposition 100 und den linken Schaltarm der Sensorposition 101, also einen adressierten Zustand und einen nicht-adressierten und mit Erhaltungsspannung gekennzeichneten Zustand. Die einzelnen Schaltelemente, die zum Umschalten verwendet werden, sollen kurz erläutert werden. Gezeigt ist die Adressenleitung 14 und die parallele Adressenleitung 16, die unterschiedliche Potentiale besitzen. Eine logische "Null" auf der Adressenleitung 14 sorgt für ein Einschalten der CMOS-Transistoren 50,53, von denen einer als p-Kanal und einer als n-Kanal-Transistor ausgebildet ist, um in beiden Richtungen Ströme leiten zu können. Die Transistoren 52,51 haben keine logische Schaltfunktion, sondern dienen nur der Kompensation von Umschaltstörungen.

Die Transistoren 50 bis 53 bilden einen kapazitätskompensierten Schalter 33, entsprechend der Funktion 12.

Mit der eingezeichneten logischen Null an der Adreßleitung erhält der n-Kanal-Transistor 50 ein Einschaltsignal "1" und der p-Kanal-Transistor 53 ebenfalls. Damit ist das Potential der Leitung 18, das hier mit D bezeichnet ist, an der Anschlußleitung 6 zu der Mikroelektrode 3 durchgeschaltet bzw. durchgekoppelt.

Das CMOS-Transistorpaar 40,41 repräsentiert den anderen Schalter 13, der hier abgeschaltet ist Die Verbindung der Gates ist so gestaltet, daß bei einer logischen Null auf Leitung 14 der Schalter 13 gesperrt ist. Wechselt das Potential, so ändert sich der Schaltzustand der beiden Schalterelemente 12,13, wie in Figur 8 im unteren Teil gezeigt. Hier ist auf der Adressenleitung 16 (gemäß Figur 3) eine logische "1" Ursache dafür, daß die Transistoren 40',41' des Schalters 13 einschalten und eine bipolare Stromrichtung ermöglichen, so daß das Erhaltungspotential E auf der Leitung 21 zu dem Anschluß 6 der Elektrode 3' durchgekoppelt wird. Die beiden Transistoren 50' und 53' sperren bei diesem Schaltzustand der Leitung 16, um den nicht-adressierten Zustand einzunehmen.

Noch deutlicher wird der Schaltzustand anhand von Figur 8a, bei dem die Arrayposition 100 eingezeichnet ist und beide Mikroelektroden 3,3' mit Umschaltern angesteuert sind. Diese Darstellung entspricht der schematischen Darstellung von Figur 3a, sie ist hier nur insoweit verallgemeinert, als diese Schaltkonfiguration für alle Arraypositionen (Sensorpositionen) 100,101,102,110,111,112 von Figur 3 (und auch von Figur 4) gilt. Die entsprechenden Zuordnungen der Biasleitungen 20,21, der Meßleitungen 18,19 sowie der Adreßleitungen ist durch die eingezeichneten Bezugsziffern ohne weiteres ersichtlich, wenn Figur 3 zu Hilfe genommen wird, so daß eine vertiefte Erläuterung der sich aus Figur 8 und Figur 3 sowie Figur 3a ergebenden Figur 8a hier nicht stattfinden soll.

In einer anderen spezifischen Ausführungsform, die in Figur 4 schematisch dargestellt ist, werden an den Sensorpositionen zusätzlich neben den CMOS-Schalteinrichtungen 12 und 13 zusätzlich integrierte Elemente zur Auslesung, Verstärkung und gegebenenfalls zur Zwischenspeicherung vorgesehen. Dabei wird der Lesezustand, wie vorstehend zu Figur 3 beschrieben, in gleicher Weise durch die Adreßleitungen 14, 15 bestimmt und die übrigen Sensorpositionen mit den Adreßleitungen 16, 17 über die Biasleitungen 20 und 21 potentialmäßig kontrolliert und durch die Meßleitungen 18, 19 ausgelesen. In den elektronischen Elementen 22, 22' und 23, 23' in Figur 4 sind an jeder Sensorposition und an jeder individuellen Elektrode 3 und 3' elektronische Verstärker angeordnet. Dabei wird an der Sensorposition direkt das elektrochemische Meßsignal, was durch die Elektrodenprozesse generiert wird, über Vorverstärker verstärkt und kann dann entsprechend Figur 3 über das Meßleitungspaar 18, 19 im adressierten Zustand ausgelesen werden. Bei dieser Verfahrensweise sind die nichtadressierten Leseverstärker in den elektronischen Elementen 23, 23' der parallelen, benachbarten Spalten ohne Funktion.

In einer besonderen Ausführungsform werden in die'elektronischen Elemente 22, 22' und 23, 23' zusätzlich Speicher integriert. Da der elektrochemische Prozeß durch die konstant erhaltene Elektrodenpolarisation auch in den Zeiten abläuft, in denen sich Sensorpositionen im Nichtiesezustand befinden, wird diese Zeit genutzt, um über die Leseverstärker der Elemente 23, 23' das in den Ultramikroelektroden generierte Signal in einem beispielsweise elektronischen Zwischenspeicher zu akkumulieren und abzuspeichern. Bei dieser Ausführungsform wird das an den Elektroden generierte Signal über Leseverstärker in einen Zwischenspeicher gegeben, der beim späteren Lesevorgang über die Meßleitungen ausgelesen wird. Beim Lesevorgang wird das während der gesamten Zeit des Nichtlesezustandes im Speicher akkumulierte elektrochemische Ergebnis sehr rasch ausgelesen.

Es ist bei dieser Anordnung nicht notwendig, längere Meßzeiten während eines Auslesevorganges einer Sensorposition 4 in Kauf zu nehmen. Die besondere Konstruktion mit den zusätzlichen Biasleitungen macht diese Art der (verborgenen) Meßwertgewinnung und Zwischenspeicherung möglich. Man erreicht auf diese Weise eine erhebliche Beschleunigung des Ausleseprozesses und eine wesentliche Verbesserung des Nutzsignals. In der Ausführungsvariante gemäß Figur 4 lassen sich durch die Integration elektronischer Komponenten an den einzelnen Sensorpositionen auch elektrische Sensorarrays mit höherer Dichte der Arraypositionen (1000 und mehr) anordnen.

Typisch für die integrierten CMOS-Schalter und elektronischen Zusatzelemente unterhalb der Arraypositionen im Silizium werden Standard-Transistoren, wie in **Figur 5** schematisch gezeigt, als CMOS-Wanne 24 mit Source 25 und Drain 26 angeordnet. Gates und Leiterbahnen aus Polysilizium 31 verbinden wie auch CMOS-Aluminium 27 im CMOS-Dielektrikum 28 die chip-intemen Elemente. Ebenfalls mittels Aluminium oder auch Wolfram wird die Kontaktierung der chip-intememen Elemente mit den Elektroden an den Sensorarraypositionen durch eine flüssigkeitsdichte Siliziumnitrid-Passivierung 29 hindurch erreicht. Der Kreuzungsbereich 32 zeigt exemplarisch, wie sich Leiterbahnen kreuzen, z.8. die Adreßleitung 15 mit der Meßleitung 18 gemäß Figur 4. Die vorstehend beschriebenen mit verschiedenen elektronischen Elementen ausgerüsteten elektrischen Sensorarrays eignen sich alle in gleicher Weise für eine Multianalytmessung. Wie vorstehend beschrieben, wird die Immobilisierung unterschiedlicher affinitätsbindender Moleküle auf einzelnen Sensorarraypositionen, z. B. in den Mikrokompartments, ausgeführt, indem durch Mikrodosierung beispielsweise tintenstrahlanaloge Dosiertechnik (z.B. Piezodosierer) oder Mikrokapillardosierung die Reaktionslösungen zugeführt werden. Es ist ebenso möglich, durch Stempeltechniken individuell auf einzelne Positionen Moleküle aufzubringen, die dann reagieren oder haften. Beispielsweise werden Selfassembling-Schichten durch sog. Kontaktstempelung vom Stempel auf die Elektrodenoberfläche übertragen und damit individuell über eine Thiol-Goldbindung belegt.

Bei einer anderen Ausführungsform wird die Immobilisierung durch aufgesetzte Mikrodurchflußsysteme bzw. Stempel für die Applizierung von Flüssigkeiten durch Ein- und Ausflußöffnungen über einzelnen Arraypositionen oder in Gruppen oder in Reihen erreicht. Die so mit unterschiedlichen affinitätsbindenden Molekülen ausgestatteten Arraypositionen aller Ausführungsformen werden dann mit einem Multianalytgemisch in ihrer Gesamtheit in Kontakt gebracht. Dies kann durch Tauchen des Sensorarrays in die Analytlösung oder durch Einbau in eine Durchflußzelle oder durch Befüllen von Kompartimenten an den Einzelpositionen erfolgen. Die unterschiedlichen affinitätsbindenden Moleküle auf oder über den Arraypositionen binden durch ihre hohe Spezifität ausschließlich ihr Zielmolekül, sofern es im Analytgemisch vorhanden ist. Dieser Bindungsprozeß ebenso wie ein analoger Bindungsprozeß an immobilisierten Molekülen in Gelen oder auf Partikeln ist Vorausetzung für den folgenden elektrochemischen Detektionsprozeß. Die Verwendung von trägergebundenen Fängermolekülen erzielt hohe Beladungsdichten in einer Sensorarrayposition, da nicht nur die Flächen, sondern das Volumen genutzt werden.

Für das Redox-Recycling werden Enzymmarker verwendet, die entweder mit dem Zielmolekül an die Sensorarrayposition eingeführt werden oder nach der erfolgten spezifischen Bindung durch sekundäre Bindungsprozesse wie Antikörperbindung, Interkalation, kovalente Anheftung und andere gebräuchliche Markierungsreaktionen gebunden werden. Die Markerenzyme, die sich nur an Arraypositionen befinden, an denen die molekulare Erkennungsreaktion stattgefunden hat, werden mit einem elektrochemisch inaktiven Substrat z. B. p-Aminophenylphosphat versetzt, das dann durch die Enzymreaktion in ein elektrodenaktives Produkt das p-Aminophenol umgewandelt wird. Im zyklischen Prozeß einer an Anode und Kathode der bandförmigen Ultramikroelektroden ablaufenden Oxidation und Reduktion wird ein Summenstrom der mit der menge der an dieser Arrayposition gebundenen Moleküle streng korreliert. Bezogen auf gebundene Analytmoleküle muß die Menge eingeführten Markerenzyme quantitativ und stöchiometrisch sein. Nutzt man die zur Immobilisierung hergestellten Mikrokompartments auch zur Volumentrennung bei dieser Art Detektion aus, ist die in jedem Mikrokompartment entstehende Konzentration an elektroaktiven Spezies ein quantitatives Maß für die Zahl der an dieser Arrayposition individuell stattgefundenen Erkennungsreaktionen. Auf diese Weise bedeutet das Fehlen einer elektrochemischen Reaktion auch das Ausbleiben des Erkennungsereignisses und damit die Abwesenheit des gesuchten Analyten an der jeweiligen Arrayposition.

Die von den Enzymmarkern für das Redox-Recycling erzeugten elektrodenaktiven Moleküle können problemlos in wasserhaltigen Gelen an die Elektrodenoberfläche diffundieren. Auch aus einer Partikelpackung über dem Elektrodenarray diffundieren sie über die Flüssigkeit zwischen den festen Partikeln, wobei im geringen Restvolumen besonders rasch eine Konzentrationserhöhung herbeigeführt wird.

Da sich der Detektionsprozeß durch das Ultramikroelektrodenverhatten nur unmittelbar an der Elektrodenoberfläche abspielt, ist die bestimmende Zone die Elektrodendoppelschicht und wenige Moleküllagen darüber. Dadurch ist die Methode unabhängig von Konvektion und allein durch die Braun'sche Molekularbewegung bestimmt, so daß jegliches aktives Rühren unterbleiben kann und zum Beispiel mit Stop-Flow-Verfahren oder geschlossenen Kammern und Mikrokompartments gearbeitet werden kann.

In einer anderen Ausführungsform, wenn die Mikrokompartments nach erfolgter Immobilisierung wieder entfernt wurden, erhält man nur qualitative Aussagen für die An- oder Abwesenheit von Analyten unter der Bedingung, daß die Konvektion sich bildendender Markerenzymprodukte genügend unterdrückt wird, z.B. durch ausreichenden Abstand der Positionen und stopped flow Analytik.

In einer weiteren Ausführungsform werden die planaren Sensorpositionen zur Redox-Recycling- Detektion wieder mit volumentrennenden Elementen für die Sensorpositionen versehen. Dies kann beispielsweise auch durch das Aufsetzen der vorstehend zur Immobilisierung beschriebenen Stempel erfolgen. Es lassen sich damit Einzelsensorposftionen, Gruppen von Sensorpositionen oder Reihen von Sensorpositionen separat erfassen und messen.

Bei einer anderen Ausführungsform, die die elektrochemische Impedanzspektroscopie als Detektionsmethode verwendt, werden ebenfalls die in Figuren 1, 3 und 4 beschriebenen Anordnungen der elektronischen Schalt- und Zusatzelemente mit Wechselstrom verwendet. Die Spezifität dieser Meßmethode und der Abstand der Elektroden in den nm-Dimensionen machen es möglich, eine solche Reaktion markerfrei zu vermessen.

Zur Messung werden Wechselströme mit bestimmter Frequenz oder Frequenzgemische von 0,1 Hz - 1MHz auf eine Biasspannung von vorzugsweise 10 - 200 mV aufgeprägt, die in der gleichen Weise wie die Elektrodenpolarisation für die voltametrischen Methoden an die Elektroden der Sensorpositionen angelegt wird. Bei dieser Detektionsmethode werden Elektrodenabstände < 500 nm, bevorzugt 20 - 200 nm, verwendet. Wie bei den Ausführungsvarianten für das Redox-Recycling werden die auf oder zwischen den Elektrodenoberflächen in der Sensorarrayposition immobilisierten, affinitätsbindenden Moleküle mit dem Gemisch verschiedener Analyte zusammengebracht und die molekulare Erkennungsreaktion läuft wie voranstehend beschrieben ab. Mit den durch die geringen Elektrodenabständen erzielbaren starken elektrischen Feldern von einigen MV/m kann auf jeder Position individuell vermessen werden, wie die affinitätsbindenden Moleküle die Elektrodenoberfläche bedecken. Dies zeigt sich entsprechend der Bedeckung der Oberflächen durch die Abnahme der Kapazität der Ultramikroelektroden. Erfolg der Immobilisierung und der Bedeckungsgrad lassen sich auf diese Weise quantitativ verfolgen. Die mit affinitätsbindenden Fängerelektroden versehenen einzelnen Sensorarraypositionen werden individuell mittels Impedanzspektroskopie vermessen, wobei Kapazität, Leitfähigkeit und Dielektrizitätskonstante sowie der Phasenwinkel durch die Messung und ihre Auswertung separiert werden können. Nach erfolgter Erkennungsreaktion an einer einzelnen Arrayposition, die üblicherweise mit einem größeren Biomakromolekül erfolgt, bildet sich ein großer Molekülkomplex, der typischerweise größer ist als der Abstand zwischen zwei Elektroden. Das elektrische Feld reicht dabei nicht erheblich über diese Molekülkomplexe hinaus und erfaßt so nur die elektroden nahen Bereiche, so daß schwebende Partikel nicht stören. Eine neue Impedanzmessung nach erfolgten Erkennungsreaktionen mit den gleichen Parametern wird zur Differenzbildung benutzt. Eine sichtbare Veränderung gibt Auskunft darüber, an welchen Positionen Komplexbindungen stattgefunden haben. Die lmpedanzänderung wird durch die Verdrängung des Elektrolyten und Beeinflußung des elektrischen Feldes z.B. durch geladene DNA-Moleküle hervorgerufen.

Im Unterschied zum quantitativen Redox-Recycling ist die impedanzspektroskopische Detektionsmethode semiquantitativ und gestattet eine Aussage über stattgefundene oder nicht stattgefundene molekulare Erkennungsreaktionen. Die Parameter, die bei der Impedanzspektroskopie ausgewertet werden, erlauben Aussagen über die Größe der Moleküle, die an der Elektrodenoberfläche bei der Erkennungsreaktion gebunden haben sowie über den Ladungszüstand dieses Moleküle. Auch die Dichte, der Molekolbelegung hat Einfluß auf das Meßergebnis. Alle Parameter können zur näheren Analyse des molekularen Erkennungsvorgangs und der beteiligten Partner herangezogen werden.

In einer speziellen Ausführungsform wird das elektrische Sensorarray nach Immobilisierung der affinitätsbindenden Moleküle oder nach stattgefundener molekularer Erkennungsreaktion und entsprechender Waschvorgänge mit einem Hydrogel belegt. Diese Belegung mit Hydrogel kann für verschiedene Verfahren zur Anwendung der elektrischen Sensorarrays vorteilhaft sein. Bei der Bedeckung der oberflächengebundenen affinitätsbindenden Moleküle mit Hydrogel können z.B. die Analyte aktiv durch Dosierung oder elektrophoretisch durch Applikation elektrischer Felder mittels Hilfselektroden in das Gel und an die Affinitätspartner herangebracht oder durch Diffusionsprozesse zugeführt werden. Die Beschichtung mit Hydrogelen nach stattgefundener molekularer Erkennungsreaktion an den Oberflächen kann auch dazu verwendet werden, zusätzliche Marker oder Reagenzien durch elektrophoretische Prozesse oder Direktdosierung an die Molekülkomplexe heranzuführen und zu detektieren.

Alternativ werden Hydrogele benutzt, um partikelgebundene immobilisierte Fängermoleküle oder nach stattgefundener molekularer Erkennungsreaktion immobilisierte Zielanalyte in den Mikrokompartments einzuschließen. Die Methode ist bevorzugt geeignet für die Anwendung des Redox-Recycling, da die diffundierenden Enzymprodukte durch das Gel wenig gehindert werden, an die Elektrodenoberfläche zu gelangen. Zu beobachten ist dabei lediglich eine Verlangsamung der Diffusion.

In einer anderen Ausführungsform werden die Hydrogele über das gesamte elektrische Sensorarray gleichmäßig aufgebracht und bewirken durch ihre Diffusionshemmung eine verbesserte Zuordnung der Bindungsvorgänge zu einzelnen Arraypositionen, ohne daß Mikrokompartments hergestellt wurden.

Die an den einzelnen Sensorpositionen angeordneten Elektroden und flächenförmigen oder mit Punktelektroden besetzten Hilfselektroden sowie die spiral- oder kreisförmig angeordneten Bandelektroden nach Figuren 2 können neben ihrer Verwendung für die Detektionsprozesse selbst auch zur Applikation elektrischer Felder im Sinne einer Freifeld- oder Gelelektrephorese eingesetzt werden. Für die Heranführung geladener Analytmoleküle oder Reagenzien an die Elektrodenoberflächen, z.B. an den Ort der molekularen Erkennungsreaktionen, können besonders vorteilhaft parallel angeordnete interdigitale Ultramikroelektroden nach Figuren 2b, 2c, 2d oder 2g verwendet werden. Dabei werden in einer Ausführungsform des Verfahrens die beiden Ultramikroelektrodenpaare in Figuren 2b, 2c und 2d beispielsweise in der Weise zu einem elektrophoretischen System geschaltet, daß immer zwei zusammengehörige interdigitalen Fingerpaare oder Paare von bandförmigen Ultramikroelektroden einen Pol des elektrischen Feldes bilden. Je nach Polarisation und Ladung,der Moleküle werden elektrophoretische Transportvorgänge eingeleitet. Verwendet man Felder mit niedriger Frequenz im unteren Hz und mHz-Bereich, werden wechselseitig Moleküle an die Elektroden herangeführt. Üblicherweise werden die elektrischen Felder in Sequenzen erzeugt. In den stromlosen Pausen können durch Elektrolyse gebildete Gase abdiffundieren und auch pH-Gradienten sich ausgleichen.

In einer anderen Ausführungsform werden die Hilfselektroden wie in Figuren 2e und 2f zur Applikation der vorstehend beschriebenen elektrischen Felder benutzt. Sie können dabei die gleiche Polarisation aufweisen und gegen einen interdigitales Elektrodenpaar 3, 3' geschaltet werden, oder es wird das Feld zwischen den Hilfselektroden 3e und 3e' bzw. 3f und 3f erzeugt, so daß die Moleküle in die Nähe der Detektionselektroden 3, 3' gezogen werden. Im Gegensatz zu den flächenhaften Hilfselektroden 3e und 3e' erlauben die Hilfselektroden 3f und 3f durch die punktförmigen aktiven Elektrodenflächen mit Ultramikroelektrodencharakter eine wesentlich höhere Stromdichte pro Fläche durch eine verbesserte Diffusion. Auch durch die Elektrodenkonstruktion 3g und 3g' kann eine wesentlich höhere Stromdichte pro Fläche als für die Elektroden 3 und 3' erreicht werden. Im Ergebnis dieser punktförmigen Strukturierung gibt sich durch hemispherische Diffusion der Vorteil, daß eine wesentlich höhere Stromdichte pro Fläche erreicht werden kann, trotzdem die aktive Elektrodenfläche verkleinert ist

Diese Ausführungsform zur Heranführung von Analyt oder Reagenzmolekülen an die Elektrodenoberfläche wird ergänzt durch die gleichzeitige Verwendung der Detektions- und Hilfselektroden zur Erzeugung elektrischer Felder nach stattgefundener Erkennungsreaktion. Bei dieser Verfahrensweise werden die schon bei niedriger Spannung unter 1V enstehenden erheblichen Feldstärken zwischen den Elektroden dazu genutzt, daß schwach gebundene Moleküle von ihrem Affinitätspartner im Unterschied zu stärker gebundenen Molekülen von den Detektionslektroden wieder entfernt werden können. Schon das einfache "Ultramikroelektrodeninterdigitalpaar" in 3, 3' in Figur 2c gestattet die Beseitigung schwächer und damit falsch gebundener Molekülkomplexe. Dazu wird das applizierte Feld zwischen den Elektroden 3 und 3' als Wechselfeld mit niedriger Frequenz (wenige Hz bis mHz) benutzt, von beiden Elektroden unerwünschte Spezies zu entfernen. Das Wechselfeld, mit niedriger Frequenz bewirkt dabei, daß immer die Elektrode, die gleich zur Ladung des unerwünschten Moleküls geladen ist, durch ihr hohes Feld die Abstoßung dieses Moleküles bewirkt. Durch die Wechselfelder werden beide Elektroden nacheinander in diesen abstoßenden Zustand versetzt und die Reaktion findet im Summenergebnis auf beiden Interdigitalsystemen statt. Die Feldapplikation wird nach kurzer Zeit, d.h. wenige Zehntelsekunden bis Sekunden durch Pausen unterbrochen, in denen Gase und pH-verändemde Spezies abdiffundieren können. Die Reaktion,kann durch biochemische Waschvorgänge oder durch Temperaturveränderung unterstützt werden. Eine Temperaturkontrolle kann sowohl extern als mit einem auf den Chips aufgebrachten Heizer aus Dünnfilmmetallbändem, wie Platin, realisiert werden.

Mit Elektrodenanordnungen, wie in Figuren 2b, 2d, 2e, 2f und 2i, ist die Anwendung des Prozesses, wie für Figur 2a beschrieben, für jedes Paar interdigitaler oder bandförmiger Ultramikroelektroden möglich. Prinzipiell kann dieser Prozeß durch Kombination beliebiger Detektor- und/oder Hilfselektroden mit dem gleichen Verfahren der niedrigfrequenten Feldumpolung und der Beseitigung schwach-bindender bzw. unerwünschter Moleküle von den Elektrodenoberflächen benutzt werden.

Als besondere Ausführung werden die in Figuren 2b, 2e, 2f und 2i außen liegenden Elektroden zur Felderzeugung verwendet, während die dazwischen liegenden Elektroden stromlos sind. Diese Art der Applikation kann auch zur Heranführung von Molekülen an die zwischenliegenden Elektrodenpaare benutzt werden, da sich diese in einer Art Feldkäfig befinden. Mit den gleichen multiplen Anordnungen sind überdies auch kombinierte Gleich- und Wechselstromapplikationen, Umpolungen sowie wahlweise Adressierung der Einzelelektroden möglich und damit gezielte Effekte der Molekülheranführung und der Molekülbeseitigung an beliebigen Elektroden zu erzielen.

In den Ausführungsformen gemäß Figuren 2e und 2f lassen sich die flächenförmigen oder mit Punkten besetzten Hilfselektroden so einsetzen, daß jeweils zu einer oder beiden Ultramikroelektroden die gewünschte Polung der Elektroden zur Beseitigung von Molekülen vorliegt. Hier ist Gleichstrom oder die niedrigfrequente Wechselstromapplikation über Kreuz, z.B. in Figur 2e zwischen Elektroden 3e und 3', bzw. 3e' und 3 möglich. Damit lassen sich die Einzelelektroden selektiv behandeln. Die unterschiedliche Behandlung der Elektrodensysteme in Figuren 2b, 2d, 2e und 2f läßt sich in einer anderen Ausführungs auch dazu verwenden, daß an einzelnen Elektroden unerwünschte Bindungen beseitigt werden und an anderen bestehen bleiben, so daß aus, der Differenzmessung auf die Differenzmenge geschlossen werden kann.

An den kreisförmigen Elektroden gemäß Figur 2b oder spiralförmigen analogen Strukturen sind die vorstehend beschriebenen Verfahren zur Verwendung der elektrischen Felder dadurch besonders geeignet, daß durch eine zentrale Elektrode eine Art Feldkäfig über die dazwischen liegenden Elektroden gelegt werden kann, so daß diese auch im stromlosen Zustand von diesem Feld in gewünschter Weise zur Entfernung oder Heranführung von Molekülen genutzt werden können.

Die punktförmige Elektrodenanordnung in Figur 2h kann in einer anderen Ausführungsform vorteilhaft zur Erzeugung elektrischer Felder sowohl zur Anreicherung von Molekülen als auch zur Entfernung von Molekülen eingesetzt werden. Dazu werden diese Elektroden an verschiedenen Stellen eines Sensorarrays z.B. als außen liegender Ring oder konzentriert in Innenposition oder durch Kombination von beiden ausgewählten Positionen eines Sensorarrays angeordnet. Sie dienen zur Erzeugung starker Felder an anderen Arraypositionen über den Raum des Sensorarrays hinweg durch besonders hohe Stromdichten. Die erzielbare hohe Stromdichte bei vergleichsweise niedrigen Spannungen erzeugt Feldkäfige, die den Transport von geladenen Molekülen nach elektrophoretischen Prinzipien besonders verbessern.

### Ausführungsbeispiele

### Beispiel 1: Herstellung eines elektrischen Sensorarrays mit direkter Kontaktableitung in Siliziumtechnologie

Mikroelektrodenstrukturen entsprechend Figuren 1 und 2a werden in Standardsiliziumtechnologie hergestellt, vgl. Reimer et al., Sensors and Actuators, A 46/47(1995)66. Dazu wird 500 nm dickes thermisches Oxid auf 4,"-Siliziumwafem erzeugt. Auf dem Oxid wird Fotolack photolithogr-efisch so strukturiert, daß die Konturen der Elektroden für die Elektrodenstrukturen freiliegen. Das Ultramikroelektrodensystem konzentrischer Ringe gemäß Figur 2a besteht aus ringförmigen Elektrodenbändern mit 1,5 µm Breite im Ringabstand von 800 nm. Die Ringe sind abwechselnd über die Leiterbahnen 6 mit den Kontakten gemäß Figur 2a verbunden. Es sind 16 Sensorpositionen in einer 4 x 4 Matrix mit Arraypositionen von 300 µm Durchmesser auf dem Sensorarray angeordnet Die 2 x 16 Ableitkontakte befinden sich auf zwei benachbarten Seiten des 1 x 1 cm großen Siliziumchips. Die Abstände der Sensorarraypositionen betragen 400 µm, so daß ein aktives Gebiet von ca. 2,5 mm x 2,5 mm entsteht.

Durch 15 sec Tauchen in 10%ige Flußsäure wird das Oxid ca. 150 µm tief angeätzt. Eine 20 nm dicke Titanhaftschicht und eine 150 nm dicke Goldschicht werden auf die gesamte Oberfläche mittels Elektronenstrahl aufgedampft. Durch einen Liftoff Prozeß wird alles Material zwischen den Elektroden, Leiterbahnen und Kontakten beseitigt. Der Wafer wird anschließend mit einer 400nm dicken Silizium-oxinitrid-Schicht bedeckt, die im Plasma durch chemische Abscheidung (PECVD-SiNₓ:H) erzeugt wird. Im folgenden werden die Arraypositionen und die außenliegenden Kontaktflächen durch reaktives chemisches Trockenätzen bis auf die Goldflächen freigelegt. Nach Aufschleudem eines Schutzlackes wird der Wafer von der Rückseite entsprechend der vorgesehenen Einzelchipkanten ca. 250 µm tief von der Rückseite eingesägt.

### Beispiel 2: Herstellung eines elektrischen Sensorarrays mit direkter Kontaktierung auf Glas

Auf 4"-Pyrexglaswafem werden mit einer dem Beispiel 1 entsprechenden Photolithographie Interdigitalelektrodenarrays entsprechend Figur 2e mit 9 Sensorpositionen im Raster 3 x 3 strukturiert. Dazu wird abweichend von Beispiel 1 auf das Glas eine 20 nm dicke Chromhaftschicht gefolgt von einer 150 nm dicken Platinschicht aufgedampft und wie im Ausführungsbeispiel 1 durch Liftoff-Technik fertig strukturiert. Als Haftvermittler für die folgende Isolationsschicht wird eine 3%ige Lösung von Alkyloxysilan in Aceton mit der Oberfläche in Kontakt gebracht. Die 400 µm großen Sensorarraypositionen im Abstand von 500 µm werden nach Aufschleudem einer 10µm dicken Polyimidschicht mit Standard-Photolithographie so strukturiert, daß die Kontaktflächen und die Sensorpositionen freigelegt werden. Das Intenügital-ElektrodenSystem mit Hilfselektroden entsprechend Figur 2e besteht an jedem Elektrodenfingersystem aus 90 je 200 µm langen und 1 µm breiten Fingern, wobei die Interdigitalabstände 0,9 µm betragen. Die Hilfselektroden 3e und 3e' sind wie in der Figur 2e dargestellt, bis 50 µm vom Rand der Sensorarrayposition flächig ausgeführt. Wie im Beispiel 1 wird der Wafer geschützt und eingesägt.

### Beispiel 3: Herstellung eines elektrischen Sensorarray-Systems mit CMOS-Schaltem

Die Schalterebene wird mit einem CMOS-Standardprozeß, vgl. **Widmann, Mader**, **Friedrich**, Technologie hochintegrierter Schaltungen, Springer Verlag Berlin 1996, in' einem Prozeß mit 1 µm Minimalstrukturen hergestellt. Die nach Figur 3 erforderlichen Kreuzungen von Leiterbahnen werden durch Überkreuzungen 32 von Polysilizium- 31a und Aluminium-Bahnen 27 realisiert. Der größere elektrische Widerstand spielt wegen der kleinen Sensorströme keine Rolle. Im verwendeten CMOS-Prozeß werden die Schalter 12, 12' und 13, 13' vorteilhaft als Transmission-Gates ausgeführt. Jeweils ein Transmission-Gate verbindet die Punkte 12a, 12a' mit der Leitung 18 bzw. 19 und die Punkte 13a, 13a' mit der Bias-Leitung 21 bzw. 20. Die Adreß-Leitungen 14, 15, 16, 17 bestehen aus einem parallel laufenden Paar von Leiterbahnen, an denen Signale komplementärer Polarität zu den Gates der beiden Transistoren eines Transmission-Gates geführt werden. Alternativ kann auch ein on-chip Inverter an jeder Sensorposition zwei komplementäre Signale aus einer Adreßleitung gewinnen, um die Transmission Gates 12,13 komplementär anzusteuern. Bei der einen Polung ist das Transmission-Gate von 12a nach18 leitend und das Transmission-Gate von 12a nach 21 sperrend (Schaltzustand 12). Bei der umgekehrten Polung ist 12a-18 sperrend und 12a-21 leitend (Schaltzustand 13). Die Transmission-Gates schalten sowohl positive als auch negative Ströme.

Zusätzlich zu den üblichen Anschlußpads einer CMOS-Schaltung an den Rändern des Chips enthält die Schaltung nach Figur 3 an den Stellen 12a, 12a' und 13a, 13a' Aluminiumpads, mit denen die Verbindung zu den Elektroden-Arrays hergestellt wird. Standardmäßig wird der CMOS-Prozeß mit der Aufbringung einer PECVD-Nitridschicht und Öffnung der Anschluß-Pads in dieser passivierenden Schicht abgeschlossen. Auf diese Isolationsschicht werden mit gleicher Liftoff-Technik, wie in Ausführungsbeispiel 1 dargestellt, Haftschicht und Goldelektroden 30 direkt aufgedampft und wie oben beschrieben photolithographisch strukturiert. Eine weitere Passivierung ist nicht vorgesehen, da die Kontakte von den Interdigital- und Hilfselektroden direkt senkrecht in die darunterliegende Schalterebene geführt werden.

### Beispiel 4: Herstellung eines elektrischen Sensorarrays mit Schaltern, Verstärkern und Integrator in CMOS-Technologie

Für die Herstellung des Ausführungsbeispiels nach Figur 4 werden der gleiche CMOS-Standard-Prozeß, sowie die gleichen Elektroden und Leitungsanordnungen benutzt, wie unter Beispiel 3 beschrieben wurde, In der 1 µm-Technologie werden diese Bauteile auf einer Fläche von 300 µm x 400 µm angeordnet. Zwischen den Elektroden und den Transmission-Gates, die zu den Meßleitungen 18, 19 führen, liegt jetzt ein Operationsverstärker und eine integrierte Kapazität von 1 pF, die den Ausgang mit dem Eingang des Operationsverstärker verbindet. Weiterhin liegt ein Schalter parallel zu dieser Kapazität. Von der Adressiereinheit 10 führen zusätzliche Steuerleitungen zu diesem Schalter, die ihn außerhalb der Meßzeiten geschlossen halten. In der beschriebenen Ausführung erzeugt ein Strom von 1 nA an den Elektroden am Ausgang des Operationsverstärkers nach 1 msec eine Spannung von 1 V. Diese Spannung wird wie in Beispiel 3.beschrieben mit Transmission-Gates auf die Meßleitungen 18,19 geschaltet und mit dem Leseverstärker 11 gemessen.

### Beispiel 5: Aufbau von Mikrokompartments mit vorgefertigten Polymeren

Elektrische Sensorarrays, wie sie nach Beispiel 1 bis 4 hergestellt worden sind, werden mit Aceton im Ultraschallbad von Schutzlack befreit und mehrmals mit Alkohol und Reinstwasser gewaschen. Im folgenden Schritt werden sie durch das Auflaminieren einer vorher perforierten 400 µm dicken Polypropylen-Folie mit Mikrokompartments versehen. Die Perforation entspricht dabei den Größen der Sensorarraypositionen und den Kontaktflächen an den Außenrändern. Das Auflaminieren geschieht mittels Heißsiegel-Technologie durch induktive Erwärmung. Die Justage der mittels eines Vakuumstempels in Wafergröße aufgebrachten Folie wird mittels Justiermarken auf der Waferoberfläche durch optische Kontrolle vorgenommen. Der auf -10° C gekühlte Wafer wird entlang der vorgesägten Chipkanten gebrochen, so daß die einzelnen Chips erhalten werden.

### Beispiel 6: Aufbau von Mikrokompartments mit photolithographisch strukturierten Polymeren

Elektrische Sensorarrays, wie sie nach Beispiel 1-4 aufgebaut wurden, werden mit Aceton im Ultraschallbad von Schutzlack befreit und mehrmals mit Alkohol und Reinstwasser gewaschen. Anschließend werden sie im Spincoat-Verfahren mit Teflon AF (DuPont) mit einem 15 µm dicken Film beschichtet. Zuvor wird der gesamte Wafer mit dem zugehörigen Haftmittel (DuPont) benetzt. Nach Ausbacken der Teflonschicht bei 150°C für 20 Minuten werden mittels reaktivem Trockenätzen die Gebiete der Sensorpositionen und der Kontaktpads bis zu den metallischen Oberflächen freigelegt Der Wafer wird entlang der vorgesägten Chipkanten gebrochen, so daß die einzelnen Chips erhalten werden.

### Beispiel 7: Immobilisierung von Oligonukleotiden auf elektrischen Sensorarrays

Ein nach Beispiel 5 hergestellter Chip mit 400 µm hohen polymeren Mikrokompartments wird auf einen Keramikträger mit üblichen Leiterbahnen montiert und drahtgebondet. Durch Aufkleben eines polymeren Formteils aus Polysiloxan entlang der Chipkanten, das die aktiven Elektrodengebiete eingrenzt, wird ein Reaktionsgefäß von ca. 5 mm Durchmesser auf dem Chip befestigt. In dieses Reaktionsgefäß wird eine 5 mM Lösung von 11-Merkapto-undecanyl-amin in Cyclohexanon, eingefüllt, abgedeckt und bei Raumtemperatur für 5 Stunden belassen. Die Belegung der Elektroden durch Self-assembling wird kontrolliert durch eine Online-Impedanz-Messung (EG&G Model 398). Die abnehmende Kapazität durch die Belegung mit der monomolekularen Molekülschicht ist ein Maß für die Bedeckung. Die Belegung wird abgebrochen, wenn die ursprüngliche Kapazität der Chipelektroden um 70% abgesunken ist.

Diese Belegung der Metalloberflächen kann alternativ auch vor dem Brechen und Vereinzeln der Chips durch Tauchen des gesamten vorher entlackten Wafers in die analogen Lösungen vorgenommen werden.

Die mit Aminofunktionen derivatisierte Oberfläche des Chips wird anschließend mit einem Tropfen (0,1 -10 µl) 20 mM Tolylen-2,4- diisocyanat (TDI) in Essigsäureethylester (EEE) bei RT während 10 - 60 min inkubiert. Es wird mit EEE gewaschen und getrocknet.

Nach Waschen eines so aktivierten Chips mit neutraler Phosphatpufferlösung werden mittels Mikrokapillardosierung nacheinander in jede Sensorarrayposition je 5nl 24mer-Oligonukleotid eingebracht, die am 5'-Terminus eine Jodoacetyl-Gruppe tragen.

Die Nucleotidsequenz ist an jeder Arrayposition unterschiedlich entsprechend der zu analysierenden verschiedenen Ziel-DNA-Moleküle. Dabei sind die Volumina der Reaktionsflüssigkeiten kleiner als das Kompartimentvolumen. Die Kopplungsreaktion erfolgt spontan während einer Stunde bei Zimmertemperatur. Nach erfolgter kovalenter Anbindung wird das elektrische Sensorarray mit SSPE-Puffer (0,9 M NaCl, 50 mM NaH₂PO₄, 5 mM Na₂EDTA, pH 7,5) gewaschen.

### Beispiel 8: Affinitätsbindung von DNA auf elektrischen Sensorarrays mit trägergebundenen Oligonucleotiden

Auf ein nach Beispiel 7 mit unterschiedlichen Fängeroligonukleotiden beladenes elektrisches Sensorarray wird der Analyt als DNA - Gemisch aufgegeben. Es wird Analyt-DNA verwendet, in ,welche bei der konventionellen Vervielfältigung der DNA mittels PCR biotinylierte Primer Biotin-Reste eingeführt wurden. Die Analyt-DNA in SSPE-Puffer wird mit Denhardt's Lösung (0,5g Ficoll, 0,5g Polyvinylpyrrolidon, 0,5 g RSA in 0,51 H₂O) in eine, Konzentration von 1 µg/ml überführt und auf das Sensorarray aufgegeben und bei Raumtemperatur 2 Stunden inkubiert. Zur Entfernung überschüssiger Analyt-DNA wird bei 40° C mit SSC-Puffer (52,6g NaCl, 26,5g Na-Citrat in 0,81 H₂O) gewaschen.

### Beispiel 9: Immobilisierung von partiketgebundenen affinitätsbindenden Molekülen auf elektrischen Sensorarrays

Ein elektrisches Sensorarray, das nach Beispiel 1 hergestellt und nach Beispiel 5 mit Mikrokompartments versehen wurde, wird über einem üblichen Magneten zur Handhabung magnetischer Carrier plaziert. In jedes Mikrokompartment werden durch Mikrokapillardosierung 10nl Flüssigsuspensionen magnetischer Polymerkügelchen mit unterschiedlichen Oligonukleotiden appliziert und durch die Magneten am Boden der Mikrokompartments über den Elektroden fixiert. Die Beladung der magnetischen Träger erfolgte zuvor separat für alle Positionen nach einem Standardverfahren (Boehringer) durch StreptavidinBiotin-Kopplung. Die Träger sind dabei oberflächlich mit Streptavidin beschichtet und binden die 5' -biotin-modifizierten 24mer-Nukleotide. Ober die Streptavidin/Biotin-Bindung wurden unterschiedliche Oligonukleotide fest auf den magnetischen Trägern immobilisiert.

### Beispiel 10: Detektion der Affinitätsbindung an Oberflächen von elektrischen Sensorarrays

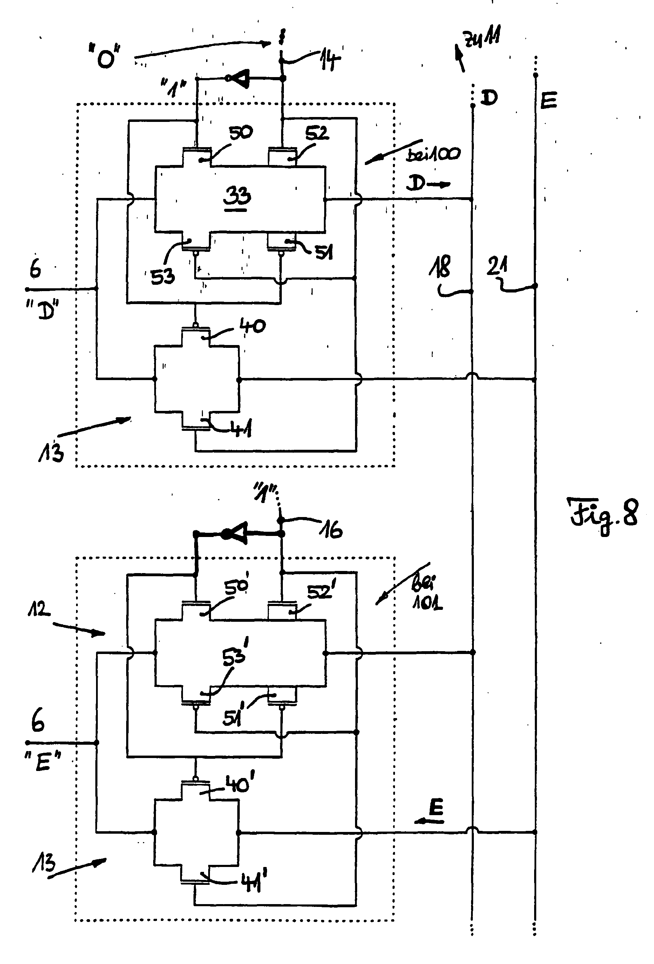

Elektrische Sensorarrays mit immobilisierten Oligonukleotiden nach Beispiel 7 werden nach Hybridisierung analog Beispiel 8 zur Auslesung mittels Redox-Recycling vorbereitet Dazu wird das gesamte elektrische Sensorarray mit 1,5 µl einer neutralen Phosphatpufferlösung des Markerenzyms alkalische Phosphatase, die als Streptavidinkonjugat vorliegt, befüllt. Die Biotin/Strepavidin-Bindung erfolgt während einer Stunde. Danach werden alle nicht gebundenen Enzymkonjugate mittels 2 mM p-Aminophenylphosphat in Phosphatpuffer pH 9,5 von der Sensoroberfläche weggespült. Nach Absaugen aller über die Mikrokompartments überstehenden Flüssigkeit wird die in jedem Mikrokompartment durch die Enzymreaktion enstehende p-Aminophenolkonzentration, die der Menge doppelstranggebundener DNS adäquat ist, individuell mit einem 16-Kanal-Multipotentiostaten (Eigenbau) gemessen. Für das Redox-Recycling werden die Ultramikroelektroden paarweise mit 2 verschiedenen Potentialen beaufschlagt. Die Anode mit + 350 mV und die Kathode mit-100 mV gegen eine Silber/Silberchlorid-Referenzelektrode (sh. Figur 7). Der anodische und der kathodische Strom jeder Arrayposition wird als Stromanstieg dl/dt an der jeweiligen Sensorposition ausgewertet Man erhält einen Stromanstieg von 0,5 bis 2 nA pro Minute je nach Beladungsdichte. Die Summe beider Ströme ist ein quantitatives Maß für die Anzahl gebundener Ziel-DNA an jeder Sensorposition.

Die Menge gebundener DNA pro Sensorposition wird dadurch bestimmt, daß eine Arrayposition des Sensorarray als interner Standard benutzt wird. Dazu wird dem Analyten ein 35mer-Oligonucleotid, welches 20 komplementäre Basen zu dem Fängeroligonucleotid an einer Arrayposition aufweist in bekannter Konzentration beigemischt.

### Beispiel 11: Detektion der Affinitätsbindung auf Oberflächen von elektrischen Sensorarrays mittels Impedanzspektroskopie

Elektrische Sensorarrays, die nach Beispiel 6 aufgebaut werden, werden an jeder Sensorarrayposition mit 10nl Oligonukleotidlösung in einer Konzentration von 10 µg pro ml Phosphatpuffer pH 7 befüllt. Die 24-mer-Oligonukleotide besitzen einheitlich 6 Thymidin-Reste am 5'-Kettenende, deren letzte 3 mit Thiolat Gruppen modifiziert sind. Nach 12 Stunden ist die Schwefel/Gold-Bindung der Thiolatgruppen beendet.

Bei Raumtemperatur wird jede Arrayposition mittels Impedanzspektroskopie (EG&G Model 392) in einem Frequenzbereich zwischen 10mHz und 1MHz vermessen und die komplexe Impedanz analysiert.

Das Sensorarrays wird mit SSPE-Puffer (0,9M NaCl, 50mM NaH₂PO₄, 5mM Na₂EDTA, pH 7,5) gewaschen. Die Analyt-DNA in SSPE-Puffer wird mit Denhardt's Lösung (0,5g Ficoll, 0,5g Polyvinylpyrrolidon, 0,5g RSA in 0,51 H₂O) in eine Konzentration von 1µg/ml überführt und auf, das Sensorarray aufgegeben und bei Raumtemperatur 2 Stunden inkubiert. Zur Entfernung überschüssiger Analyt-DNA wird bei 40°C Mit SSC-Puffer (52,6g NaCl, 26,5g Na-Citrat in 0,81 H₂O) gewaschen.

Bei Raumtemperatur wird jede Arrayposition mittels Impedanzspektroskopie in einem Frequenbereich zwischen 10mHz und 1 MHz erneut vermessen und die komplexe Impedanz analysiert.

Die Differenz der Messungen an jeder Sensorarray-Position vor und nach DNA-Bindung zeigt im Falle der Emiedrigung des elektrischen Leitfähigkeitstherms der komplexen Impedanz die Position mit erfolgter DNA-Bindung an.

### Beispiel 12: Transport geladener Moleküle zu Detektorelektroden des elektrischen Sensorarrays

Die Analyt-DNA in 200 mmol/l Bemsteinsäure-Puffer pH 5,1 wird mit einer Konzentration von ca. 1 µg/ml auf das Sensorarray aufgegeben.

Mit Hilfe einer externer Präzisionsstromquelle wird auf alle Elektroden 3e' und 3 ein Strom von 20 nA für 80 msec aufgeprägt. Danach wird für 80 msec auf die Elektroden 3e und 3' umgeschaltet. Die Elektroden 3 und 3' sind dabei positiv gepolt Die gesamte Schaltsequenz wird 100 mal wiederholt. Zur Entfernung überschüssiger Analyt-DNA wird dann bei 40°C mit SSC-Puffer (52,6g NaCl, 26,5g Na-Citrat in 0,81 H₂O) gewaschen.

### Beispiel 13: Elektrische Stringenzbehandlung von hybridisierter DNA auf elektrischen Sensorarrays

Ein elektrisches Sensorarray mit hybridisierter DNA, wie im Beispiel 12 verwendet, wird mit einer 200 mmol/l Bemsteinsäure-Puffer pH 5,1 beaufschlagt.

Mittels einer externen Stromquelle wird 10nA Wechselstrom von 50 Hz Strom für 0,2sec auf alle Elektrodenpare 3, 3' aufgeprägt. Nach einer Pause von 0,2sec wird die gesamte Schaltsequenz 100 mal wiederholt. Abdiffundierte schwächer gebundene Moleküle werden dann bei 40°C mit SSC-Puffer (52,6g NaCl, 26,5g Na-Citrat in 0,81 H₂O) weggewaschen.

### Beispiel 14: Selektive Desorption von oberflächengebundenen Molekülen auf elektrischen Sensorarraychips

Ein elektrisches Sensorarray wird nach Beispiel 1 hergestellt und nach Beispiel 7 mit Oligonukleotiden beladen. Dazu werden Elektrodengeometrien an den Sensorarraypositionen gemäß Figur 2e verwendet. In den Probenring wird pH 5,1 eingefüllt.

Alle Elektroden 3 und 3' auf dem Sensorarray werden an eine Stromquelle angeschlossen. Nun wird Wechselstrom mit 20 Hz und einer Spannung von 2V für eine Sekunde angelegt und nach einer Pause von 0,5 Sekunden erneut eingeschaltet Diese Sequenz wird 50 mal wiederholt. Anschließend wird das elektrische Sensorarray mit SSPE-Puffer (0,9M NaCl, 50mM NaH₂PO₄, 5 mM Na₂EDTA, pH 7,5) gewaschen.

Die folgende Hybridisierung von Analyt-DNA erfolgt nur noch auf fängerbeladenen Elektroden 3e, 3e' und wird analog Beispiel 8 ausgeführt.

Wie in Beispiel 10 wird mit alkalischer Phosphatase markiert. Mittels Redox-Recycling messen die Elektroden 3 und 3' die p-Aminophenolkonzentration die auf den Flächen 3e, 3e' produziert wird. Dabei wird der Stromanstieg dl/dt an der jeweiligen Sensorposition ausgewertet. Man erhält einen Stromanstieg von 0.2 bis 2 nA pro Minute je nach Beladungsdichte.

### Beispiel 15: Kontrolle und Meßwerterfassung mittels eines ASIC

Ein elektrisches Sensorarray wird analog Beispiel 15 hergestellt, mit Oligonukleotidfängern beladen und zur Affinitätsbindung von Ziel-DNA sowie folgender Enzymmarkierung verwendet. An die 32 Leitungen 6, 6' des Sensorarrays wird ein selbstentwickelter ASIC zur seriellen Elektrodensteuerung mit 32 Schaltausgängen angeschlossen und mit einem Bipotentiostaten verbunden. Die Vorbereitung und Realisierung des Redox-Recycling werden wie nach Beispiel 10 ausgeführt. Die anodischen Potentiale von +350 mV und die kathodischen Potentiale von -100 mV werden vom Bipotentiostaten an den ASIC angelegt und über die direkten Leiterbahnen zu den einzelnen Sensorpositionen 4 geleitet. Dabei ist jede Sensorposition 4 einem Schaltersystem auf dem ASIC zugeordnet. Prozessorkontrolliert wird nun seriell (nacheinander) durch den Bipotentiostaten jede Sensorposition für 0,1sec ausgelesen. Beim Umschalten einer Arrayposition vom Lese- in den Nichtlesezustand wird mittels des ASIC das anodische und das kathodische Potential auf die jeweilige Biasleitung geschaltet. Alle 16 Arraypositionen arbeiten dadurch kontinuierlich im Redox-Recycling.

Dieser serielle Auslesezyklus wird 5min ausgeführt. Der Anstieg des Summenstroms pro Zeit je Arrayposition wird gemessen und wie in Beispiel 10 interpretiert.

### Beispiel 16: Kontrolle und Meßerfassung mit teilintegrierter Elektronik

Die Adreßleitungen 14, 15 und 16, 17 des Sensorarrays, die in Figur 3 gezeigt sind, werden mit einem PC-gesteuerten Dekoder verbunden. An je eine der Leseleitungen 18, 19 wird ein Kanal eines 8-kanaligen Multipotentiostaten angeschlossen. Die 8iasleitungen 20, 21 werden mit analogem anodischen (+350mV) und dem kathodischen Potential (-100mV) wie in Beispiel 15 versorgt.

Die Vorbereitung und Realisierung des Redox-Recycling werden wie nach Beispiel 10 ausgeführt.

Im Lesezustand werden alle Sensorpositionen in der Spalte entlang den Adreßleitungen 14, 15 aktiviert und durch die integrierten Schalter 12, 12' an die jeweiligen Meßkanäle des Multipotientiostaten geschaltet. Alle anderen Sensorpositionen sind im Nichtlesezustand und durch die integrierten Schalter 13, 13' mit den Biasleitungen 20 bzw. 21 verbunden, so daß auch hier die entsprechenden Potentiale an den Elektroden 3 bzw. 3' anliegen und die Redoxreaktion kontinuierlich abläuft.

Prozessorfcontrolliert wird nun durch den Multipotentiostaten jede aktive Sensorposition für 0,1 sec ausgelesen. Danach wird durch den Dekoder diese Spalte mit Schalter 12,12' in den Nichtlesezustand versetzt und sofort die nächste Reihe mittels der benachbart liegenden Adreßleitungen adressiert.

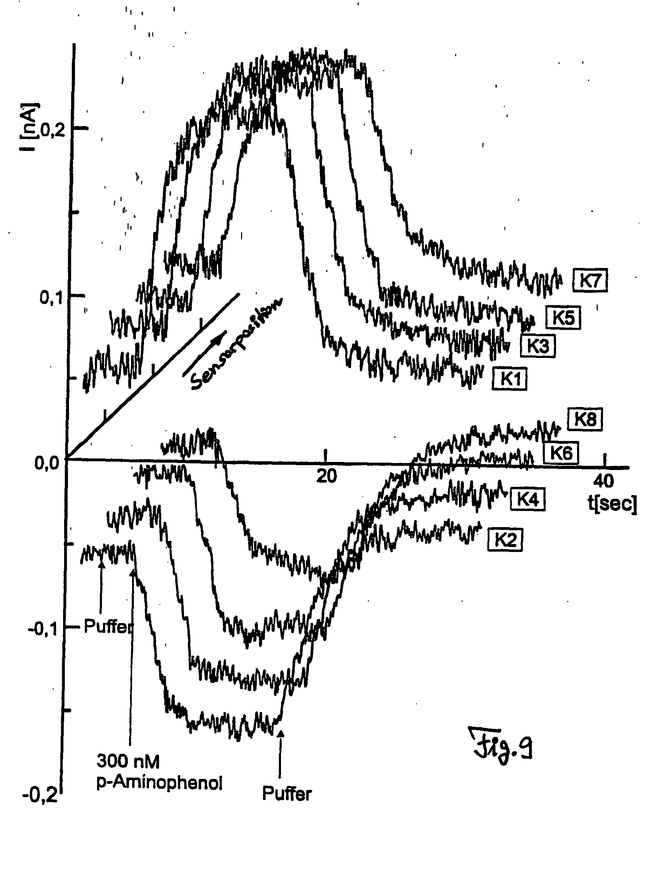

Dieser Auslesezyklus wird ca. 5 Minuten ausgeführt. Der Anstieg des Stroms pro Zeit wird für jede Sensorposition separat gemessen und im PC gespeichert. Die Auswertung entspricht Beispiel 15. Dargestellt ist die Aufzeichnung in Figur 9.

### Beispiel 17: Kontrolle und Meßwerterfassung mit integriertem Zwischenspeicher

Ein elektrisches Sensorarray wird gemäß Beispiel 4 und 5 hergestellt, mit Elektrodengeometrien, die der Figur 2c entsprechen. Die Vorbereitung des elektrischen Sensorarrays mit chemischen Komponenten erfolgt analog Beispiel 15.

Die Adreßleitungen 14, 15 und 16, 17 des Sensorarrays, wie in Figur 4, gezeigt werden mit einem PC-gesteuerten Decoder verbunden, analog Beispiel 15. An jede der Leseleitungen 18, 19 wird ein hochempfindlicher Verstärker mit seinem Ausgang an einen ADC angeschlossen. Die Biasleitungen 20, 21 werden mit analogem anodischen (+350mV) und dem kathodischen Potential (-100mV) aus einem Bipotentiostaten versorgt. Die Adressierung erfolgt wie im Beispiel 16.

Abweichend von diesem Beispiel werden nur die im Nichtlesezustand an den Elektroden 3 und 3' durch Redox-Recycling generierten Ströme durch integrierte Vorverstärker mit internen Integratoren 23, 23' für jede Elektrode einzeln gespeichert. Beim späteren Lesevorgang durch Adressierung wird nur der Inhalt dieser Integratoren abgefragt

Das dort ablaufende Redox Recycling generiert Strom, der über den internen Verstärker in der Schaltung 23 zum internen positionsspezfischen Integrator geleitet und dort aufsummiert wird. Die Aufsummation geschieht während des gesamten Nichbesezustandes.

## Patentansprüche

1. **Elektrisch ansteuerbare Sensoranordnung** mit einer Vielzahl von Sensorpositionen (4), geeignet zur elektrochemischen Detektion molekularer Stoffe und geeignet zum Transport oder zur Handhabung geladener Moleküle, mit
- mehr als zwei Sensorpositionen auf einem im Wesentlichen planaren Träger (1), wobei jede Sensorposition als ein Array (4) von zumindest zwei als Paar benachbarten Mikroelektroden (3a,3a'; 3,3'; 3i,3i') ausgebildet ist;
- einer ersten Leitungsführung (14,15;16,17) zur elektrischen Adressierung jedes Arrays (4) auf dem Träger (1); um
-- elektrische Gleich- und/oder Wechselfelder an den Arrays (4) zu erzeugen;
-- unterschiedliche elektrochemische Reaktionen oder Eigenschaften individuell an den Arrays (4) zu detektieren;
-- die - zwischen zwei elektrischen Adressierungen derselben Sensorposition - an dieser Sensorposition (4) abgelaufenen Ereignisse elektrisch auszulesen; und/oder
-- affinitätsbindende Moleküle auf eines der Arrays (4), an einen dort befindlichen partikulären Träger oder in ein dort befindliches Gel unabhängig von optischen Eigenschaften zu transportieren und dort zu immobilisieren.
- **gekennzeichnet durch** eine Anordnung zur elektrischen Kontrolle (20,21:13,13') an den zumindest zwei Arrays (4), nicht mehr adressierte Arrays (4) nach einem Ende des oder eines elektrischen Adressiervorgangs (12,12';14,15) mit einer Polarisationsspannung kontinuierlich zu versorgen.

2. Sensoranordnung nach Anspruch 1, wobei der planare Träger (1) aus Silizium, Glas, Keramik oder Kunststoff besteht.

3. Sensoranordnung nach einem der Ansprüche 1 bis 2, wobei eine Elektrodenoberfläche der Mikroelektroden (3,3a') aus einem Edelmetallfilm, wie Gold, Platin oder Iridium, oder aus Kohlenstoff besteht.

4. Sensoranordnung nach Anspruch 1, wobei die erste Leitungsführung (14,15) eine individuelle elektrische Adressierung jedes Arrays (4) als jeweilige Sensorposition (4) erlaubt.

5. Sensoranordnung nach Anspruch 1, wobei die erste Leitungsführung (14,15;16,17) eine zeilen- oder spaltenweise Adressierung mehrer Sensorpositionen erlaubt und die adressierten Sensorpositionen (101,110) im wesentlichen parallel, aber individuell auslesbar sind.

6. Sensoranordnung nach Anspruch 1, wobei die Mikroelektroden an jeder einzelnen Sensorposition mit einer jeweiligen elektronischen Schaltung (13,12;12',13') so adressierbar sind, daß elektrochemische Ereignisse auslesbar sind und Potentiale zur Polarisation ohne Unterbrechung nach einem Auslesen bestehen bleiben, um eine elektrische Doppelschicht an flüssigkeitsbenetzten Elektroden nicht zu beeinflussen.

7. Sensoranordnung Anspruch 1, wobei integrierte Schaltungen als Umschalter (12,13;12',13') im aus Silizium bestehenden planaren Träger (1) vorgesehen sind,
oder außerhalb des planaren Trägers (1) angeordnet sind (Figur 6), welche Schaltungen Bestandteil der Anordnung zur elektrischen Kontrolle (20,21;16,17) sind.

8. **Verwendung** der Sensoranordnung nach Anspruch 1 zu einem seriellen Auslesen elektrochemischer Vorgänge, die bei den Mikroelektroden, insbesondere auch zusätzlichen Elektroden, eines einzelnen Arrays (4) in einer Zeit zwischen aufeinanderfolgenden aber zeitlich beabstandeten individuellen Adressierungsvorgängen dieses Arrays (4) ablaufen, dem einzelnen Array zugeordnet, individuell erfaßt, gespeichert und/oder aufsummiert werden.

9. Sensoranordnung nach Anspruch 1 oder 5, bei der die Arrays (4) in elektrisch einander zugeordneten Gruppen angeordnet über die erste Leitungsführung (14, 15; 16, 17) ansteuerbar sind, wobei eine jeweilige Gruppe von Arrays (4) individuell ansteuerbar ist, bestehend aus zumindest zwei Arrays (4).

10. Sensoranordnung nach Anspruch 1 oder 8, wobei den zumindest zwei, vorzugsweise im wesentlichen allen Sensorpositionen, eine Meß- und Speichereinheit (22,23;22',23') zugeordnet ist, insbesondere bei den Mikroelektroden räumlich eng benachbart angeordnet ist, um die abgelaufenen Ereignisse eine Zeit zu speichern, bevor sie bei einer folgenden Adressierung elektrisch ausgelesen werden.

11. Sensoranordnung zur elektrochemischen Detektion molekularer Assays und zum Transport geladener Moleküle nach einem der Ansprüche 1 bis 10, **dadurch gekennzeichnet, daß** Ultramikro- und Hilfselektrodenoberflächen aus unterschiedlichen Materialien bestehen.

12. Sensoranordnung zur elektrochemischen Detektion molekularer Assays und zum Transport geladener Moleküle nach einem der vorigen Ansprüche, **dadurch gekennzeichnet, daß** jede einzelne Sensorposition zumindest ein Ultramikroelektrodenpaar gleicher oder verschiedener Geometrie aufweist.

13. Sensoranordnung zur elektrochemischen Detektion molekularer Assays und zum Transport geladener Moleküle nach einem der vorigen Ansprüche, **dadurch gekennzeichnet, daß** die paarweise angeordneten Ultramikroelektroden als interdigitale Fingerelektroden oder als mit punktförmigen Ultramikroelektroden bedeckte Flächen oder Interdigitalanordnungen oder spiral- oder kreisförmig angeordnete Bandstrukturen angeordnet sind.

14. Sensoranordnung nach Anspruch 11 oder 1, wobei die paarweise angeordneten Ultramikroelektroden mehrschichtig als von Isolatorschichten getrennte bandförmige Metallfilme vertikal gestapelt sind.

15. Sensoranordnung nach einem der vorigen Ansprüche, wobei an jeder einzelnen Sensorposition neben den Ultramikroelektroden zusätzlich weitere flächige oder strukturierte Elektroden, die kein Ultramikroelektrodenverhalten aufweisen und/oder unkontaktierte metallische Flächen angeordnet sind.

16. Sensoranordnung zur elektrochemischen Detektion molekularer Assays und zum Transport geladener Moleküle nach einem der Ansprüche 1 bis 15, **dadurch gekennzeichnet, daß** die Sensorpositionen von Flüssigkeiten bedeckt sind und Reagenzien, Analyte oder Analytgemische jeder einzelnen Sensorposition oder allen Sensorpositionen gleichzeitig zuführbar sind.

17. Sensoranordnung zur elektrochemischen Detektion molekularer Assays und zum Transport geladener Moleküle nach einem der Ansprüche 1 bis 16 **dadurch gekennzeichnet, daß** an den einzelnen Sensorpositionen affinitätsbindende Moleküle auch mit unterschiedlicher Spezifität auf den einzelnen Elektroden und/oder auf metallischen Hilfsflächen und/oder auf Flächen des Trägers und/oder Kompartmentwandungen so immobilisiert sind, daß voltametrische oder impedimetrische Meßverfahren mit den Ultramikroelektroden ausführbar sind.

18. Sensoranordnung zur elektrochemischen Detektion molekularer Assays und zum Transport geladener Moleküle nach einem der vorigen Ansprüche, wobei an den einzelnen Sensorpositionen affinitätsbindende Moleküle, die auf den Ultramikroelektroden gebunden wurden, durch Desorption oder elektrochemische Oxidation wieder entfernbar sind.

19. Verwendung der Sensoranordnung nach einem der Ansprüche 1 bis 18 zur elektrochemischen Detektion molekularer Assays und zum Transport geladener Moleküle als eine voltametrische Detektion in flüssigen Analyten, unabhängig von partikulären Bestandteilen und/oder aufliegenden Gelen und/oder anhaftenden Substanzen.

20. Verwendung der Sensoranordnung nach einem der vorigen Anordnungs-Ansprüche zur elektrochemischen Detektion molekularer Assays und zum Transport geladener Moleküle für eine impedimetrische Detektion in flüssigen Analyten unabhängig von insbesondere schwebenden partikulären Bestandteilen.

21. Verwendung der Sensoranordnung nach einem der vorigen Anordnungs-Ansprüche zur elektrochemischen Detektion individueller molekularer Bindungsereignisse an jeder Sensorposition nachdem Analyte aus Stoffgemischen an die auf oder über den Sensorpositionen (4) immobilisierten affinitätsbindenden Moleküle spezifisch gebunden wurden.

22. Verwendung der Sensoranordnung nach einem der vorigen Anordnungs-Ansprüche, wobei an jeder Sensorposition individuell das Ausbleiben molekularer Bindungsereignisse detektiert wird, nachdem Analyte aus Stoffgemischen mit den auf oder über den Sensorpositionen (4) immobilisierten affinitätsbindenden Molekülen eine spezifische Bindung eingegangen sind.

23. Verwendung der Sensoranordnung nach Anspruch 1, wobei an jeder Sensorposition individuelle molekulare Bindungsereignisse nach Bindung von Analyten aus Stoffgemischen an die auf oder über den Sensorpositionen immobilisierten affinitätsbindenden Moleküle **dadurch** mit den Ultramikroelektroden detektiert werden, daß redoxaktive Reaktionsprodukte bindungsspezifisch eingebrachter Enzymmarker qualitativ und/oder quantitativ erfaßt werden.

24. Sensoranordnung nach Anspruch 1, wobei die einzelnen Sensorpositionen durch volumenseparierende Kompartments so abtrennbar sind, daß eine positionsspezifische quantitative elektrochemische Detektion möglich ist.

25. Sensoranordnung nach Anspruch 1, wobei die Ultramikroelektroden aus Edelmetall und wahlweise weitere flächige oder strukturierte Elektroden und/oder unkontaktierte metallische Flächen gleichzeitig als Immobilisierungsflächen für Selfassembling-Monoschichten unterschiedlicher thiolmodifizierter affinitätsbindender Moleküle auf den verschiedenen Sensorpositionen genutzt werden.

26. Verwendung der Sensoranordnung nach Anspruch 25 zur Ausbildung von Selfassembling-Monoschichten mit auf allen Sensorpositionen gleichartiger Beschichtung von bifunktionellen thiolmodifizierten Molekülen, die in einem zweiten Reaktionsschritt zur Bindung gleicher oder unterschiedlicher affinitätsbindender Moleküle auf jeder einzelnen Sensorposition genutzt werden.

27. Verwendung der Sensoranordnung nach Anspruch 24 oder 25 zum Belegen der an den einzelnen Sensorpositionen immobilisierten affinitätsbindenden Moleküle mit einer Schicht aus Hydrogelen, die insbesondere das gesamte elektrische Sensorarray bedecken.

28. Verwendung der Sensoranordnung nach Anspruch 1 zum Einbringen und Fixieren unterschiedlicher affinitätsbindender Moleküle in Kompartments an den einzelnen Sensorpositionen, welche Moleküle an Polymere oder an Nanopartikel aus Metallen oder mineralischen Stoffen oder in gelartigen Substanzen trägergebunden sind.

29. Verwendung der Sensoranordnung nach Anspruch 1 oder 27, wobei an einzelne Sensorpositionen (4) eingebrachte und an partikulären Trägern immobilisierte affinitätsbindende Moleküle zusätzlich in einer Schicht aus Hydrogelen fixiert werden.

30. Sensoranordnung nach Anspruch 1, wobei zwischen den Ultramikroelektrodenpaaren der verschiedenen Positionen des elektrischen Sensorarrays, insbesondere unter Einbeziehung von Hilfselektroden des Sensorarrays (4), solche elektrischen Felder erzeugbar sind, dass geladene Moleküle nach elektrophoretischen Prinzipien bewegbar sind oder bewegt werden können.

31. Sensoranordnung nach Anspruch 1, wobei zwischen den Ultramikroelektrodenpaaren der verschiedenen Positionen des elektrischen Sensorarrays, insbesondere unter Einbeziehung von Hilfselektroden des Sensorarrays (4), elektrische Wechselfelder so erzeugbar sind, daß gebundene Analytmoleküle abhängig von Bindungsstärke und Ladung von den einzelnen Sensorpositionen entfernbar sind.

32. Sensoranordnung nach Anspruch 1, wobei eine zweite Leistungsführung (18,19) dem Träger (1) zugeordnet ist, zur Übertragung von Meßsignalen (C,D) aus der von der ersten Leitungsführung (14,15) adressierten Sensorposition (100).

33. Sensoranordnung nach Anspruch 1, wobei eine elektrische Adressierung - über die erste Leitungsführung (14,15) im Träger - eine Detektion oder Reaktion bei der adressierten Sensorposition (100) unter Stromverbrauch erlaubt, also entsprechend ausgebildet ist.

34. Sensoranordnung nach Anspruch 1 oder 33, wobei die Anordnung ausgebildet ist, bei der elektrischen Kontrolle - über eine zweite Leitungsführung (18,19) im Träger - eine Detektion oder Reaktion bei zumindest einer, insbesondere bei allen nicht adressierten Sensorpositionen (101) zu erlauben, insbesondere unter Stromverbrauch.

35. Sensoranordnung nach Anspruch 1, wobei der Adressiervorgang über die erste Leitungsführung (14,15) erfolgt und eine zweite Leitungsführung aus dem Träger (1) zugeordneten Bahnen (18,19), insbesondere im wesentlichen senkrecht zur ersten Leitungsführung, vorgesehen ist, welche zweite Leitungsführung Bestandteil der Anordnung zur elektrischen Kontrolle der zum Lesen nicht adressierten Sensorpositionen (101,102,111,112) ist.

36. Sensoranordnung nach Anspruch 1, wobei die Kontrollanordnung eine stromtragfähige Direktverbindung (20,13',13a'; 21,13,13a) der Elektroden (6,6';3,3') der Sensorpositionen (4,100,101) zu mindestens einem Stromfluß bereitstellenden Potential (E,F) enthält, das bevorzugt außerhalb der Sensorpositionen vorgesehen ist.

37. Sensoranordnung nach Anspruch 36, wobei die Kontrollanordnung im wesentlichen verlustfreie Direktverbindungen (20,13',13a'; 21,13,13a) von beiden Elektroden (6,6';3,3') einer jeweiligen Sensorpositionen zu einem Stromfluß bereitstellenden Potential oder einer Potentialdifferenz (E,F), insbesondere fernab von den Sensorpositionen enthält.

38. Ansteuerverfahren einer Sensoranordnung mit einer Vielzahl von Arrays (4) als Sensorpositionen aus jeweils zumindest zwei Mikroelektroden (3a,3a'; 3,3'; 3i,3i'), wobei eine erste Anordnung (12,12';14,15;16,17) zur Adressierung jedes Arrays (4) auf dem Träger (1) die Arrays (4) adressiert, womit
-- elektrische Gleich- und/oder Wechselfelder an den Arrays (4) erzeugt werden;
-- unterschiedliche elektrochemische Reaktionen oder Eigenschaften individuell an den Arrays (4) detektiert werden;
-- die - zwischen zwei elektrischen Adressierungen derselben Sensorposition - an dieser Sensorposition abgelaufenen Ereignisse elektrisch ausgelesen werden; oder
-- affinitätsbindende Moleküle auf eines der Arrays (4), an einen dort befindlichen partikulären Träger oder in ein dort befindliches Gel unabhängig von optischen Eigenschaften transportiert werden und dort immobilisiert werden;
das Verfahren **gekennzeichnet durch**
einen elektrischen Kontrollvorgang an nicht adressierten Arrays (4), bei dem nach dem Ende eines oder des Adressiervorgangs (12,12';14,15) nicht mehr adressierte Arrays (4) mit einer im wesentlichen konstanten Polarisationsspannung weiterhin versorgt werden.

39. Ansteuerverfahren nach Anspruch 38, wobei die im Wesentlichen konstante Polarisationsspannung ihre Spannung auch dann beibehält, wenn in der Zeitspanne der elektrischen Kontrolle durch die nicht adressierten Arrays (4) Strombelastungen entstehen.

40. Verfahren nach Anspruch 38, wobei jedem Array (4) als Sensorposition zumindest zwei Umschaltfunktionen (12,12',13,13') zugeordnet sind, um das Array zwischen einem Messleitungspaar (18,19) und einer zweiten Leitungsführung (20,21) zur Bereitstellung einer Erhaltungsspannung (E,F) umzuschalten oder mit den einen oder anderen Leitungen zu koppeln.

## Claims

1. An electrically actuatable sensor arrangement comprising a number of sensor positions (4), suitable for electrochemical detection of molecular substances and suitable for conveyance or manipulation of charged molecules, comprising
- more than two sensor positions on a substantially planar support (1), wherein each sensor position is in the form of an array (4) of at least two paired neighbouring microelectrodes (3a, 3a'; 3, 3'; 3i, 3i');
- a first conductor arrangement (14, 15; 16, 17) for electric addressing of each array (4) on the support (1) in order to;
- generate electric d.c. and/or a.c. fields in the arrays (4);
- detect various electrochemical reactions or properties individually in the arrays (4);
- electrically read out the events occurring at the sensor positions (4) between two operations of electric addressing the same sensor positions, and/or
- conveying affinity-bonding molecules to one of the arrays (4) on a particular support therein or into a gel therein irrespective of optical properties, and immobilising the molecules there,
**characterised by** an arrangement (20, 21; 13, 13') for electric monitoring of the at least two arrays (4) and designed so that at the end of an electric addressing process (12, 12'; 14, 15) the no longer addressed arrays (4) are continuously supplied with a polarisation voltage.

2. A sensor arrangement according to claim 1, wherein the planar support (1) is of silicon, glass, ceramic or plastic.

3. A sensor arrangement according to claims 1 to 2, wherein a surface of the microelectrodes (3, 3a') comprises of a film of noble metal such as gold, platinum or iridium, or of carbon.

4. A sensor arrangement according to claim 1, wherein the first conductor arrangement (14, 15) can be used for individual electric addressing of each array (4) or respective sensor position (4).

5. A sensor arrangement according to claim 1, wherein the first conductor arrangement (14, 15; 16, 17) is used a for line or column addressing of a number of sensor positions, and the addressed sensor positions (101, 110) can be read out substantially in parallel but individually.

6. A sensor arrangement according to claim 1, wherein the microelectrodes at each individual sensor position can be addressed by a respective electronic circuit (13, 12; 12', 13') so that electrochemical events can be read out and potentials for polarisation can remain without interruption after reading-out, in order not to influence an electric double layer on electrodes wetted with liquid.

7. A sensor arrangement according to claim 1, wherein change-over switches (12, 13; 12', 13') in the form of integrated circuits are provided on a planar silicon support (1),
or are disposed outside the planar support (1) (Figure 6), the circuits being a component of the electric monitoring arrangement (20, 21; 16, 17).

8. Use of the sensor arrangement according to claim 1 for serial read-out of electrochemical processes which occur in the microelectrodes, especially also in additional electrodes of an individual array (4) during the time between successive but chronologically separate individual processes of addressing the array (4), and are associated with the individual array, individually detected, stored and/or summed.

9. A sensor arrangement according to claim 1 or 5, wherein the arrays (4) are disposed in electrically associated groups and actuated via the first conductor arrangement (14, 15; 16, 17), wherein each group of arrays (4) is individually actuatable and comprises at least two arrays (4).

10. A sensor arrangement according to claim 1 or 8, wherein a measuring and storage unit (22, 23; 22', 23') is associated with the at least two or preferably with substantially all sensor positions and is spatially nearby, especially in the case of the microelectrodes, in order to store the events for some time before they are electrically read out during a subsequent addressing process.

11. A sensor arrangement for electrochemical detection of molecular assays and for conveyance of charged molecules according to any of claims 1 to 10, **characterised in that** ultramicro and auxiliary electrode surfaces are made of different materials.

12. A sensor arrangement for electrochemical detection of molecular assays and for conveyance of charged molecules according to any of the preceding claims, **characterised in that** each individual sensor position comprises at least one ultramicro electrode pair having similar or different shapes.

13. A sensor arrangement for electrochemical detection of molecular assays and conveyance of charged molecules according to any of the preceding claims, **characterised in that** the pairs of ultramicro electrodes are in the form of interdigital finger electrodes or surfaces covered with punctiform ultramicro electrodes or interdigital arrangements or spiral or circular strip structures.

14. A sensor arrangement according to claim 11 or 1, wherein the pairs of ultramicro electrodes are stacked in a number of layers of metal films in the form of strips separated by insulating layers.

15. A sensor arrangement according to any of the preceding claims, wherein in addition to the ultramicro electrodes, other flat or structured electrodes without ultramicro electrode properties and/or non-contacted metal surfaces are disposed at each individual sensor position.

16. A sensor arrangement for electrochemical detection of molecular assays and conveyance of charged particles according to any of claims 1 to 15, **characterised in that** the sensor positions are covered by liquids and **in that** reagents, analytes or analyte mixtures are simultaneously supplied to each individual sensor position or to all sensor positions simultaneously.

17. A sensor arrangement for electrochemical detection of molecular assays and conveyance of charged particles according to any of claims 1 to 16, **characterised in that** affinity-bonding molecules but also having different specificity at the individual sensor positions are so immobilised on the individual electrodes and/or on metal auxiliary surfaces and/or on surfaces of the support and/or on compartment walls that voltametric or impedimetric measurements can be made with the ultramicro electrodes.

18. A sensor arrangement for electrochemical detection of molecular assays and for conveyance of charged molecules according to any of the preceding claims, wherein affinity-bonding molecules bonded to the ultramicro electrodes at the individual sensor positions are removable by desorption or electrochemical oxidation.

19. Use of the sensor arrangement according to any of claims 1 to 18 for electrochemical detection of molecular assays and conveyance of charged molecules in the form of voltametric detection in liquid analytes, irrespective of particular constituents and/or or surface gels and/or adhering substances.

20. Use of the sensor arrangement according to any of the preceding arrangement claims for electrochemical detection of molecular assays and conveyance of charged molecules for impedimetric detection in liquid analytes, independently especially suspended particular constituents.

21. Use of the sensor arrangement according to any of the preceding arrangement claims for electrochemical detection of individual molecular bonding events at each sensor position after analytes comprising mixtures of substances have been specifically bonded to the affinity-bonding molecules immobilised at or over the sensor positions (4).

22. Use of the sensor arrangement according to any of the preceding arrangement claims, wherein the persistence of molecular bonding events at each sensor position is individually detected after analytes comrising of mixtures of substances have been specifically bonded with the affinity-bonding molecules immobilised at or over the sensor positions (4).

23. Use of the sensor arrangement in claim 1, wherein individual molecular bonding arrangements after bonding of analytes comprising of mixtures of substances to the affinity-bonding molecules immobilised at or over the sensor positions is detected at each sensor position by the ultramicro electrodes by qualitative and/or quantitative detection of redox-active reaction products of bond-specifically introduced enzyme markers.

24. A sensor arrangement according to claim 1, wherein the individual sensor positions are so separable by volumetrically separating compartments that position-specific quantitative electrochemical detection is possible.

25. A sensor arrangement according to claim 1, wherein the ultramicro electrodes of noble metal and optionally other flat or structured electrodes and/or non-contacted metal surfaces are also used as immobilisation surfaces for self-assembling monolayers of various thiol-modified affinity-bonding molecules on the individual sensor positions.

26. Use of the sensor arrangement according to claim 25 for forming self-assembling monolayers uniformly coated at all sensor positions with bifunctional thiol-modified molecules which are used in a second reaction step for bonding similar and/or different affinity-bonding molecules at each individual sensor position.

27. Use of the sensor arrangement according to claim 24 or claim 25 for coating the affinity-bonding molecules immobilised at the individual sensor positions with a layer of hydrogels, especially covering the entire electric sensor array.

28. Use of the sensor arrangement according to claim 1 for introducing and fixing various affinity bonding molecules in compartments at the individual sensor positions, the said molecules being support-bonded to polymers or to nano-particles of metals or mineral substances or in gel-like substances.

29. Use of the sensor arrangement in claim 1 or claim 27, wherein affinity-bonding molecules introduced at individual sensor positions (4) and immobilised on particular supports are additionally fixed in a layer of hydrogels.

30. A sensor arrangement according to claim 1, wherein electric fields are generated between the ultramicro electrode pairs at the various positions of the electric sensor array, especially including auxiliary electrodes of the sensor array, the fields being such that charged molecules are movable and/or moved by electrophoresis.

31. A sensor arrangement according to claim 1, wherein electric a.c. fields are generated between the ultramicro electrode pairs at the various positions of the electric sensor arrays, especially including auxiliary electrodes of the sensor array (4), so that bonded analyte molecules are immovable from the individual sensor positions in dependence on the bonding strength and the charge.

32. A sensor arrangement according to claim 1, wherein a second conductor arrangement (18, 19) is associated with the support (1) for transmitting measurement signals (C, D) from the sensor position (100) addressed by the first conductor arrangement (14, 15).

33. A sensor arrangement according to claim 1, wherein electric addressing - via the first conductor arrangement (14, 15) in the support - permits detection or reaction at the addressed sensor position (100) with consumption of electricity, i.e. is suitably designed.

34. A sensor arrangement according to claim 1 or claim 33, wherein the arrangement, in the case of electric monitoring, is designed, via a second conductor arrangement (18, 19) in the support, to permit detection or reaction at at least one or especially at all non-addressed sensor positions (101), especially with consumption of electricity.

35. A sensor arrangement according to claim 1, wherein the addressing operation occurs via the first conductor arrangement (14, 15) and a second conductor arrangement of tracks (18, 19) associated with the carrier (1) is provided at least substantially at right angles to the first conductor arrangement, the second arrangement being a component of the arrangement for electric monitoring of the sensor positions (101, 102, 111, 102) not addressed for reading.

36. A sensor arrangement according to claim 1, wherein the monitoring arrangement comprises a current-carrying direct connection (20, 13', 13a'; 21, 13, 13a) of the electrodes (6, 6'; 3, 3') at the sensor positions (4, 100, 101) to at least one current-providing potential (E, F), preferably outside the sensor positions.

37. A sensor arrangement according to claim 36, wherein the control arrangement contains substantially loss-free direct connections (20, 13', 13a'; 21, 13, 13a) from both electrodes (6, 6'; 3, 3') of each respective sensor position to a current-providing potential or a potential difference, (E, F), especially remote from the sensor positions.

38. A method of actuating a sensor arrangement comprising a number of arrays (4) in the form of sensor positions each comprising at least two microelectrodes (3a, 3a'; 3, 3'; 3i, 3i'), wherein a first arrangement (12, 12'; 14, 15; 16, 17) addresses the arrays (4) on the support (1), in order to
- generate electric d.c. and/or a.c. fields in the arrays (4);
- detect various electrochemical reactions or properties individually in the arrays (4);
- electrically read out the events occurring at the sensor positions (4) between two operations of electric addressing the same sensor positions, and/or
- conveying affinity-bonding molecules to one of the arrays (4) on a particular support therein or into a gel therein irrespective of optical properties, and immobilising the molecules there,
**characterised by** a electric monitoring process at non-addressed arrays (4) wherein after the end of an addressing process (12, 12'; 14, 15) the no longer-addressed arrays (4) continue to be supplied with a substantially constant polarisation voltage.

39. A method of actuation according to claim 38, wherein the substantially constant polarisation voltage remains even when current loads due to the non-addressed arrays (4) occur during electric monitoring.

40. A method according to claim 38, wherein each array (4) or sensor position is associated with at least two switch-over components (12, 12', 13, 13') in order to switch the array over between a pair of measuring circuits (18, 19) and a second conductor arrangement (20, 21) for providing a trickle voltage (E, F) or to couple the array to one or the other conductor.

## Revendications

1. Aménagement de capteur à commande électrique ayant une pluralité de positions de capteur (4), convenant à la détection électrochimique de substances moléculaires et convenant au transport ou à la manipulation de molécules chargées, comprenant :
- plus de deux positions de capteur sur un support sensiblement plan (1), dans lequel chaque position de capteur se présente sous la forme d'un réseau (4) d'au moins deux microélectrodes adjacentes par paire (3a, 3a'; 3, 3'; 3i, 3i');
- un premier câblage (14, 15; 16, 17) pour l'adressage électrique de chaque réseau (4) sur le support (1); pour
-- générer des champs électriques continus et/ou alternatifs sur les réseaux (4);
-- détecter différentes réactions ou propriétés électrochimiques individuellement sur les réseaux (4);
-- lire électriquement les événements qui se sont déroulés dans cette position de capteur (4) - entre deux adressages électriques de la même position de capteur; et/ou
-- transporter des molécules se liant par affinité sur un des réseaux (4), sur un support particulaire qui s'y trouve ou dans un gel qui s'y trouve, indépendamment des propriétés optiques et les y immobiliser;
- **caractérisé par** un aménagement (20, 21; 13, 13') pour le contrôle électrique sur les au moins deux réseaux (4), qui est ajusté de sorte que, à la fin d'une opération d'adressage électrique (12, 12'; 14, 15), les réseaux (4) qui ne sont plus adressés soient alimentés en continu par une tension de polarisation.

2. Aménagement de capteur selon la revendication 1, dans lequel le support plan (1) est constitué de silicium, de verre, de céramique ou d'un matériau synthétique.

3. Aménagement de capteur selon l'une quelconque des revendications 1 à 2, dans lequel une surface des microélectrodes (3, 3a') est constituée d'un film de métal précieux, tel que l'or, le platine ou l'iridium, ou de carbone.

4. Aménagement de capteur selon la revendication 1, dans lequel le premier câblage (14, 15) permet un adressage électrique individuel de chaque réseau (4) comme position de capteur respective (4).

5. Aménagement de capteur selon la revendication 1, dans lequel le premier câblage (14, 15; 16, 17) permet un adressage en ligne ou en colonne de plusieurs positions de capteur et les positions de capteur adressées (101, 110) peuvent être lues sensiblement en parallèle, mais individuellement.

6. Aménagement de capteur selon la revendication 1, dans lequel les microélectrodes peuvent être adressées dans chaque position de capteur individuelle avec un circuit électronique respectif (13, 12; 12', 13') de sorte que des événements électrochimiques puissent être lus et que des potentiels de polarisation subsistent sans interruption après une lecture pour ne pas influencer une bicouche électrique sur des électrodes imprégnées de liquide.

7. Aménagement de capteur selon la revendication 1, dans lequel des circuits intégrés sont prévus comme commutateurs (12, 13; 12', 13') dans le support plan (1) constitué de silicium, ou sont aménagés en dehors du support plan (1) (Fig. 6), lesquels circuits font partie de l'aménagement de contrôle électrique (20, 21; 16, 17).

8. Utilisation de l'aménagement de capteur selon la revendication 1 pour une lecture sérielle d'opérations électrochimiques, qui se déroulent dans les microélectrodes, en particulier même dans des électrodes supplémentaires, d'un réseau individuel (4) dans une période comprise entre des opérations d'adressage individuelles successives, mais espacées dans le temps, de ce réseau (4), qui sont affectées au réseau individuel et qui sont saisies, mémorisées et/ou sommées individuellement.

9. Aménagement de capteur selon la revendication 1 ou 5, dans lequel les réseaux (4) agencés en groupes affectés électriquement l'un à l'autre peuvent être commandés via le premier câblage (14, 15; 16, 17), dans lequel un groupe respectif de réseaux (4) peut être commandé individuellement, lequel groupe est constitué d'au moins deux réseaux (4).

10. Aménagement de capteur selon la revendication 1 ou 8, dans lequel une unité de mesure et de mémorisation (22, 23; 22', 23') est affectée à au moins deux positions de capteur, de préférence sensiblement à toutes les positions de capteur, et est aménagée en particulier spatialement à proximité étroite des microélectrodes pour mémoriser les événements qui se sont déroulés pendant un certain temps, avant qu'ils ne soient lus électriquement lors d'un adressage suivant.

11. Aménagement de capteur pour la détection électrochimique d'essais moléculaires et pour le transport de molécules chargées selon l'une quelconque des revendications 1 à 10, **caractérisé en ce que** les surfaces d'électrodes ultramicroscopiques et d'électrodes auxiliaires sont constituées de matériaux différents.

12. Aménagement de capteur pour la détection électrochimique d'essais moléculaires et pour le transport de molécules chargées selon l'une quelconque des revendications précédentes, **caractérisé en ce que** chaque position de capteur présente au moins une paire d'électrodes ultramicroscopiques de géométrie égale ou différente.

13. Aménagement de capteur pour la détection électrochimique d'essais moléculaires et pour le transport de molécules chargées selon l'une quelconque des revendications précédentes, **caractérisé en ce que** les électrodes ultramicroscopiques agencées par paires sont aménagées sous la forme d'électrodes en doigts interdigitales ou de surfaces ou de dispositifs interdigitaux ou de structures en bandes spiralées ou circulaires recouverts d'électrodes ultramicroscopiques ponctuelles.

14. Aménagement de capteur selon la revendication 11 ou 1, dans lequel les électrodes ultramicroscopiques agencées par paires sont empilées verticalement en plusieurs couches sous la forme de films métalliques en forme de bandes séparées par des couches isolantes.

15. Aménagement de capteur selon l'une quelconque des revendications précédentes, dans lequel on aménage en plus, dans chaque position de capteur individuelle, outre les électrodes ultramicroscopiques, d'autres électrodes planes ou texturées, qui ne présentent pas le comportement d'électrodes ultramicroscopiques, et/ou des surfaces métalliques non connectées.

16. Aménagement de capteur pour la détection électrochimique d'essais moléculaires et pour le transport de molécules chargées selon l'une quelconque des revendications 1 à 15, **caractérisé en ce que** les positions de capteur sont recouvertes de liquide et **en ce que** des réactifs, des analytes ou des mélanges d'analytes peuvent être acheminés simultanément à chaque position de capteur individuelle ou à toutes les positions de capteur.

17. Aménagement de capteur pour la détection électrochimique d'essais moléculaires et pour le transport de molécules chargées selon l'une quelconque des revendications 1 à 16, **caractérisé en ce que**, dans les positions de capteur individuelles, les molécules se liant par affinité même de spécificité différente sont immobilisées sur les électrodes individuelles et/ou sur des surfaces auxiliaires métalliques et/ou sur des surfaces du support et/ou sur des parois de compartiments de manière à pouvoir réaliser des procédés de mesure voltamétriques ou impédimétriques avec les électrodes ultramicroscopiques.

18. Aménagement de capteur pour la détection électrochimique d'essais moléculaires et pour le transport de molécules chargées selon l'une quelconque des revendications précédentes, dans lequel, dans des positions de capteur individuelles, on peut éliminer à nouveau les molécules se liant par affinité, qui sont fixées sur les électrodes ultramicroscopiques, par désorption ou par oxydation électrochimique.

19. Utilisation de l'aménagement de capteur selon l'une quelconque des revendications 1 à 18 pour la détection électrochimique d'essais moléculaires et pour le transport de molécules chargées comme détection voltamétrique dans des analytes liquides, indépendamment des constituants particulaires et/ou des gels appliqués et/ou des substances adhérentes.

20. Utilisation de l'aménagement de capteur selon l'une quelconque des revendications d'aménagement précédentes pour la détection électrochimique d'essais moléculaires et pour le transport de molécules chargées pour une détection impédimétrique dans des analytes liquides, indépendamment des constituants particulaires flottant en particulier.

21. Utilisation de l'aménagement de capteur selon l'une quelconque des revendications d'aménagement précédentes pour la détection électrochimique d'événements individuels de liaison moléculaires dans chaque position de capteur après que des analytes issus de mélanges de substances se sont liés spécifiquement aux molécules se liant par affinité immobilisées sur ou via les positions de capteur (4).

22. Utilisation de l'aménagement de capteur selon l'une quelconque des revendications d'aménagement précédentes, dans laquelle on détecte individuellement, dans chaque position de capteur, l'absence d'événements de liaison moléculaires, après que des analytes issus de mélanges de substances ont établi une liaison spécifique avec les molécules se liant par affinité immobilisées sur ou dans les positions de capteur (4).

23. Utilisation de l'aménagement de capteur selon la revendication 1, dans laquelle on détecte, dans chaque position de capteur, des événements individuels de liaison moléculaires après liaison d'analytes issus de mélanges de substances sur les molécules se liant par affinité immobilisées sur ou dans les positions de capteur à l'aide des électrodes ultramicroscopiques en sorte de saisir qualitativement et/ou quantitativement des produits réactionnels à effet redox de marqueurs enzymatiques insérés de manière spécifique à la liaison.

24. Aménagement de capteur selon la revendication 1, dans lequel les positions de capteur individuelles peuvent être délimitées par des compartiments séparant des volumes de manière à permettre une détection électrochimique quantitative spécifique à la position.

25. Aménagement de capteur selon la revendication 1, dans lequel les électrodes ultramicroscopiques en métal précieux et, au choix, d'autres électrodes planes ou texturées et/ou des surfaces métalliques non connectées sont utilisées en même temps comme surfaces d'immobilisation pour monocouches d'auto-assemblage de différentes molécules modifiées par un thiol et se liant par affinité dans les diverses positions de capteur.

26. Utilisation de l'aménagement de capteur selon la revendication 25 pour former des monocouches d'auto-assemblage avec un revêtement, identique sur toutes les positions de capteur, de molécules bifonctionnelles modifiées par un thiol, que l'on utilise, dans une seconde étape réactionnelle, pour lier des molécules identiques ou différentes se liant par affinité sur chaque position de capteur individuelle.

27. Utilisation de l'aménagement de capteur selon la revendication 24 ou 25 pour recouvrir les molécules se liant par affinité immobilisées sur chaque position de capteur individuelle avec une couche d'hydrogels, qui recouvrent en particulier l'ensemble du réseau de capteur électrique.

28. Utilisation de l'aménagement de capteur selon la revendication 1 pour insérer et pour fixer différentes molécules se liant par affinité dans des compartiments sur les positions de capteur individuelles, lesquelles molécules sont liées au support sur des polymères ou des nanoparticules de métaux ou des substances minérales ou dans des substances de type gel.

29. Utilisation de l'aménagement de capteur selon la revendication 1 ou 27, dans laquelle on fixe en plus des molécules se liant par affinité, insérées sur des positions de capteur individuelles (4) et immobilisées sur des supports particulaires dans une couche constituée d'hydrogels.

30. Aménagement de capteur selon la revendication 1, dans lequel on peut générer entre les paires d'électrodes ultramicroscopiques des diverses positions du réseau de capteur électrique, en particulier en tenant compte d'électrodes auxiliaires du réseau de capteur (4), des champs électriques tels que des molécules chargées puissent se déplacer ou être déplacées selon des principes électrophorétiques.

31. Aménagement de capteur selon la revendication 1, dans lequel on peut générer entre les électrodes ultramicroscopiques des diverses positions du réseau de capteur électrique, en particulier en tenant compte d'électrodes auxiliaires du réseau de capteur (4), des champs électriques alternatifs de manière à pouvoir éliminer des molécules d'analyte liées en fonction de la force de liaison et de la charge des positions de capteur individuelles.

32. Aménagement de capteur selon la revendication 1, dans lequel on affecte un second câblage (18, 19) au support (1) pour transférer des signaux de mesure (C, D) depuis la position de capteur (100) adressée par le premier câblage (14, 15).

33. Aménagement de capteur selon la revendication 1, dans lequel un adressage électrique - via le premier câblage (14, 15) dans le support - permet une détection ou une réaction dans la position de capteur adressée (100) par consommation de courant, c'est-à-dire qu'il se présente en correspondance.

34. Aménagement de capteur selon la revendication 1 ou 33, dans lequel l'aménagement est réalisé pour permettre lors d'un contrôle électrique - par un second câblage (18, 19) dans le support - une détection ou une réaction dans au moins une, en particulier dans toutes les positions de capteur (101) non adressées, en particulier par consommation de courant.

35. Aménagement de capteur selon la revendication 1, dans lequel on effectue l'opération d'adressage par le premier câblage (14, 15) et on prévoit un second câblage à partir de pistes (18, 19) affectées au support (1), en particulier sensiblement perpendiculairement au premier câblage, lequel second câblage fait partie de l'aménagement de contrôle électrique des positions de capteur non adressées pour la lecture (101, 102, 111, 112).

36. Aménagement de capteur selon la revendication 1, dans lequel l'aménagement de contrôle contient une connexion directe, capable de supporter le courant, (20, 13', 13a'; 21, 13, 13a) des électrodes (6, 6'; 3, 3') des positions de capteur (4, 100, 101) à au moins un potentiel (E, F) amorçant un flux de courant, qui est prévu de préférence en dehors des positions de capteur.

37. Aménagement de capteur selon la revendication 36, dans lequel l'aménagement de contrôle contient des connexions directes sensiblement sans pertes (20, 13', 13a'; 21, 13, 13a) des deux électrodes (6, 6'; 3, 3') d'une position de capteur respective à un potentiel amorçant un flux de courant ou à une différence de potentiel (E, F), en particulier à distance des positions de capteur.

38. Procédé de commande pour un aménagement de capteur comportant une pluralité de réseaux (4) comme positions de capteur à partir de, respectivement, au moins deux microélectrodes (3a, 3a'; 3, 3'; 3i, 3i'), dans lequel un premier aménagement (12, 12'; 14, 15; 16, 17) adresse les réseaux (4) sur le support (1) pour
-- générer des champs électriques continus et/ou alternatifs sur les réseaux (4);
-- détecter différentes réactions ou propriétés électrochimiques individuellement sur les réseaux (4);
-- lire électriquement les événements qui se sont déroulés dans cette position de capteur (4) - entre deux adressages électriques de la même position de capteur; ou
-- transporter des molécules se liant par affinité sur un des réseaux (4) sur un support particulaire qui s'y trouve ou dans un gel qui s'y trouve, indépendamment de propriétés optiques, et les y immobiliser;
**caractérisé par**
une opération de contrôle électrique sur des réseaux non adressés (4), où, à la fin d'une opération d'adressage (12, 12'; 14, 15), les réseaux (4) qui ne sont plus adressés sont en outre alimentés par une tension de polarisation sensiblement constante.

39. Procédé de commande selon la revendication 38, dans lequel la tension de polarisation sensiblement constante conserve sa tension même si des charges électriques apparaissent dans l'intervalle de temps du contrôle électrique à travers les réseaux non adressés (4).

40. Procédé selon la revendication 38, dans lequel on affecte au moins deux fonctions de commutation (12, 12', 13, 13') à chaque réseau (4) comme position de capteur pour commuter le réseau entre une paire de lignes de mesure (18, 19) et un second câblage (20, 21) pour amorcer une tension de compensation (E, F) ou pour le coupler avec l'un ou l'autre câblage.
